# EUROPEAN PATENT APPLICATION

(11) **EP 1 901 114 A1**
(43) Date of publication of application: **19.03.2008**
(21) Application number: 07017716.7
(22) Date of filing: 11.09.2007
(51) Int. Cl.: G02F 1/167

(54) **Electrophoretic display and method for driving thereof**

(30) Priority: 12.09.2006 KR 20060088050
(71) Applicant: Samsung Electronics Co., Ltd., Yeongtong-gu Suwon-city, Gyeonggi-do 442-742 (KR)
(72) Inventor: Roh, Nam-Seok, Gyeonggi-do (KR); Park, Cheoi-Woo, Gyeonggi-do (KR)
(74) Representative: Dr. Weitzel & Partner

(57) **Abstract**

An electrophoretic display and a method for driving thereof are disclosed. Some embodiments provide an electrophoretic display comprising; (a) a first electrode (190); (b) a second electrode (220); (c) an electrophoretic member (300) between the first and second electrodes, the electrophoretic member comprising: first particles (325a) each of which carries a first charge, second particles (325b) each of which carries a second charge, and third particles (325c) each of which carries a third charge, the first, second and third charges being different from each other; and a dispersion medium (310) for distributing the first, second and third particles. The electrophoretic display comprises circuitry for applying at least six different driving voltages between the first and second electrodes for selectively moving the first, second and third particles relative to at least the first electrode to display different colors. Accordingly, many colors can be represented.

## Description

### BACKGROUND OF THE INVENTION

### (a) Field of the Invention

The present invention relates to an electrophoretic display and a method for driving thereof.

### (b) Description of the Related Art

Recently flat panel displays such as liquid crystal displays, organic light emitting diode (OLED) displays, electrophoretic displays, and others have been developed to replace conventional CRT displays.

The electrophoretic display in particular includes a thin film transistor array panel with pixel electrodes, a common electrode panel with a common electrode, and electrically charged particles (electrophoretic particles) between the two panels. The electrophoretic particles, carrying positive or negative charges, move between the pixel electrodes and the common electrode to provide black-and-white or other color images.

When different voltages are applied to the pixel electrodes and the common electrode of the electrophoretic display, driving voltages are induced at the electrophoretic particles disposed between the pixel electrodes and the common electrode. These driving voltages drive the electrophoretic particles towards the pixel electrodes or the common electrode. Accordingly, external light incident on the electrophoretic display is absorbed or reflected by the electrophoretic particles located at the common electrode, thereby providing black, white, or other colors such as red, green, or blue.

Therefore, as the electrophoretic particles are driven to the pixel electrodes or the common electrode by the driving voltages, the electrophoretic display is able to provide black, white or other colors, which are the colors of the electrophoretic particles. Unfortunately, the display is inferior to the liquid crystal displays or organic light emitting diode (OLED) displays due to the inferior rendition of various colors and, in particular, of various brightness levels.

### SUMMARY OF THE INVENTION

Accordingly, the present invention has been made in an effort to solve the above problem and provide an electrophoretic display that provides many colors, e.g. many brightness levels, and provide a method for driving thereof.

Some embodiments of the invention provide an electrophoretic display comprising: (a) a first electrode; (b) a second electrode; (c) an electrophoretic member between the first and second electrodes, the electrophoretic member comprising: first particles each of which carries a first charge, second particles each of which carries a second charge, and third particles each of which carries a third charge, the first, second and third charges being different from each other; and a dispersion medium for distributing the first, second and third particles. The electrophoretic display comprises circuitry for applying at least six different driving voltages between the first and second electrodes for selectively moving the first, second and third particles relative to at least the first electrode to display different colors.

In some embodiments, the first, second and third charges are all positive or all negative.

In some embodiments, the first, second and third particles are white.

In some embodiments, the second charge is about half of the first charge, and the third charge is about one quarter of the first charge.

In some embodiments, the number of the second particles is about twice the number of the first particles, and the number of the third particles is about four times the number of the first particles.

In some embodiments, each second particle is about twice larger than each first particle, and each third particle is about four times larger than each first particle.

In some embodiments, the electrophoretic member further comprises fourth particles that are white, and a charge of each fourth particle is about one eighth of the first charge.

In some embodiments, the number of the fourth particles is about eight times the number of the first particles,

In some embodiments, each fourth particle is about eight times larger than each first particle.

In some embodiments, the electrophoretic member further comprises fifth particles, sixth particles, and seventh particles, the fifth, sixth and seventh particles being black, each fifth particle carrying a fifth charge, each sixth particle carrying a sixth charge, each seventh particle carrying a seventh charge, wherein the fifth, sixth and seventh charges are respectively equal in magnitude but opposite in polarity to the first, second, and third charges.

In some embodiments, the sixth charge is about one half of the fifth charge, and the seventh charge is about one quarter of the fifth charge.

In some embodiments, the number of the sixth particles is about twice the number of the fifth particles, and the number of the seventh particles is about four times the number of the fifth particles.

In some embodiments, each sixth particle is about twice larger than each fifth particle, and each seventh particle is about four times larger than each fifth particle.

In some embodiments, the electrophoretic member further comprises eighth particles that are black, and a charge of each eighth particle is about one eighth of the fifth charge.

In some embodiments, the number of the eighth particles is eight times the number of the fifth particles.

In some embodiments, each eighth particle is eight times larger than each fifth particle.

In some embodiments, the first, second and third particles are respectively red, green, and blue.

In some embodiments, the second charge is about one-half of the first charge, and the third charge is about one quarter of the first charge.

In some embodiments, the electrophoretic member further comprises fifth particles, sixth particles, and seventh particles, the fifth, sixth and seventh particles being black, each fifth particle carrying a fifth charge, each sixth particle carrying a sixth charge, each seventh particle carrying a seventh charge, wherein the fifth, sixth and seventh charges are respectively equal in magnitude but opposite in polarity to the first, second, and third charges, wherein the sixth charge is about one half of the fifth charge, and the seventh charge is about one quarter of the fifth charge.

In some embodiments, the electrophoretic member further comprises a capsule confining at least some of the particles and at least some of the dispersion medium.

In some embodiments, the electrophoretic display further comprises a thin film transistor connected to the first electrode.

Some embodiments of the invention provide a method for driving an electrophoretic display, the electrophoretic display comprising a first electrode, a second electrode, first to third particles between the first and second electrodes, each first particle carrying a first charge, each second particle carrying a second charge, each third particle carrying a third charge, the first, second and third charges being different from each other, the electrophoretic display comprising a dispersion medium for dispersing the first to third particles, the electrophoretic display operable to display at least eight different colors in response to six different voltages, the method comprising applying at least one of the six voltages to position the particles to display one of the eight colors.

In some embodiments, the eight colors are first to eighth colors, the six voltages are first to sixth voltages, and wherein the method comprises: applying the first voltage to move the first, second and third particles to the first electrode to display the first color; applying the fourth voltage to move the first particles to the second electrode to display the second color; applying the fifth voltage to move the first and second particles to the second electrode to display the fourth color; applying the sixth voltage to move the first to third particles to the second electrode to display the eighth color; applying the third voltage after displaying the fourth color to move the first particles to the first electrode to display the third color; applying the second voltage after displaying the eighth color to move the first and second particles to the first electrode to display the fifth color; applying the fourth voltage after displaying the fifth color to move the first particles to the second electrode to display the sixth color; and applying the third voltage after displaying the eighth color to move the first particles to the first electrode to display the seventh color.

In some embodiments, displaying the second color, the fourth color, and the eighth color are performed after displaying the first color.

In some embodiments, the first voltage, the second voltage, and the third voltage are respectively equal in magnitude but opposite in polarity to the sixth voltage, the fifth voltage, and the fourth voltage.

In some embodiments, the first to third particles are white, and the brightness increases from the first color to the eighth color.

In some embodiments, the electrophoretic display further comprises fourth to sixth particles which are black, each fourth particle carrying an electric charge having the same magnitude but the opposite polarity to the first charge, each fifth particle carrying a charge having the same magnitude but the opposite polarity to the second charge, each sixth particle carrying a charge having the same magnitude but the opposite polarity to the third charge, wherein in the displaying of the first to eighth colors, the fourth to sixth particles move in an opposite direction relative to the first to third particles.

In some embodiments, the first to third particles are respectively red, green, and blue, and the first color is black, the second color is red, the third color is green, the fourth color is yellow, the fifth color is blue, the sixth color is magenta, the seventh color is cyan, and the eighth color is white,

In some embodiments, the electrophoretic display further comprises fourth to sixth particles, each fourth particle carrying a charge having the same magnitude but the opposite polarity to the first charge, each fifth particle carrying a charge having the same magnitude but the opposite polarity to the second charge, each sixth particle carrying a charge having the same magnitude but the opposite polarity to the third charge, wherein in the displaying of the first to eighth colors, the fourth to sixth particles move in an opposite direction relative to the first to third particles.

Some embodiments provide a method for driving an electrophoretic display, the electrophoretic display comprising a first electrode, a second electrode, first to fourth particles between the first and second electrodes, each first particle carrying a first charge, each second particle carrying a second charge, each third particle carrying a third charge, each fourth particle carrying a fourth charge, the first, second, third and fourth charges being different from each other, the electrophoretic display comprising a dispersion medium for dispersing the first to fourth particles, the electrophoretic display operable to display at least sixteen different colors in response to eight different voltages, the method comprising applying at least one of the eight voltages to position the first to fourth particles to display one of the sixteen colors.

In some embodiments, the sixteen colors are first to sixteenth colors, the eight voltages are first to eighth voltages, and wherein the method comprises: applying the first voltage to move all of the first to fourth particles to the first electrode to display the first color; applying the fifth voltage to move the first particles to the second electrode to display the second color; applying the sixth voltage to move the first and second particles to the second electrode to display the fourth color; applying the seventh voltage to move the first to third particles to the second electrode to display the eighth color; applying the eighth voltage to move the first to fourth particles to the second electrode to display the sixteenth color; applying the fourth voltage after displaying the fourth color to move the first particles to the first electrode to display the third color; applying the third driving voltage after displaying the eighth color to move the first and second particles to the first electrode to display the fifth color; applying the fifth voltage after displaying the fifth color to move the first particles to the second electrode to display the sixth color; applying the fourth voltage after displaying the eighth color to move the first particles to the first electrode to display the seventh color; applying the second voltage after displaying the sixteenth color to move the first to third particles back to the first electrode to display the ninth color; applying the fifth voltage after displaying the ninth color to move the first particles to the second electrode to display the tenth color; applying the sixth voltage after displaying the ninth color to move the first and second particles to the second electrode to display the twelfth color; applying the fourth voltage after displaying the twelfth color to move the first particles back to the first electrode to display the eleventh color; applying the third voltage after displaying the sixteenth color to move the first and second particles to the first electrode to display the thirteenth color; applying the fifth voltage after displaying the thirteenth color to move the first particles to the second electrode to display the fourteenth color; and applying the fourth voltage after displaying the sixteenth color to move the first particles to the first electrode to display the fifteenth color.

In some embodiments, displaying of the second color, the fourth color, the eighth color, and the sixteenth color are performed after displaying the first color.

In some embodiments, the eighth voltage, the seventh voltage, the sixth voltage, and the fifth voltage have respectively the same magnitudes but the opposite polarities to the first voltage, the second voltage, the third voltage, and the fourth voltage.

In some embodiments, the first to fourth particles are white, and the brightness increases from the first color to the sixteenth color.

In some embodiments, the electrophoretic display further comprises fifth to eighth particles which are black, each fifth particle carrying a charge having the same magnitude but the opposite polarity to the first charge, each sixth particle carrying a charge having the same magnitude but the opposite polarity to the second charge, each seventh particle carrying a charge having the same magnitude but the opposite polarity to third charge, each eighth particle carrying a charge having the same magnitude but the opposite polarity to fourth charge, wherein in displaying the first to sixteenth colors, the fifth to eighth particles move in an opposite direction relative to the first to fourth particles.

### BRIEF DESCRIPTION OF THE DRAWINGS

FIG.1 is a layout view of an electrophoretic display according to an exemplary embodiment of the present invention;
FIG. 2 is a cross-sectional view taken along line II-II' shown in FIG. 1;
FIGS. 3A to 3G are cross-sectional views explaining a method for driving an electrophoretic display according to an exemplary embodiment of the present invention;
FIG. 4 is a cross-sectional view of an electrophoretic display according to an exemplary embodiment of the present invention;
FIG. 5 is a cross-sectional view of an electrophoretic display according to an exemplary embodiment of the present invention;
FIGs. 6A to 6G are cross-sectional views explaining a method for driving an electrophoretic display according to an exemplary embodiment of the present invention;
FIG. 7 is a cross-sectional view of an electrophoretic display according to an exemplary embodiment of the present invention;
FIG. 8 is a cross-sectional view of an electrophoretic display according to an exemplary embodiment of the present invention;
FIG. 9 is a cross-sectional view of an electrophoretic display according to an exemplary embodiment of the present invention;
FIG. 10 is a cross-sectional view of an electrophoretic display according to an exemplary embodiment of the present invention; and
FIG. 11 is a cross-sectional view of an electrophoretic display according to an exemplary embodiment of the present invention.

### DETAILED DESCRIPTION OF THE EMBODIMENTS

Some embodiments of the present invention are described below with reference to the accompanying drawings. The invention is not limited to these embodiments, and further those skilled in the art will realize that the embodiments described may be modified in various ways, all without departing from the spirit or scope of the present invention.

In the drawings, the thickness of layers, films, panels, regions, etc., is exaggerated for clarity. It will be understood that when an element such as a layer, film, region, or substrate is referred to as being "on" another element, it can be directly on the other element or intervening elements may also be present. In contrast, when an element is referred to as being "directly on" another element, there are no intervening elements present.

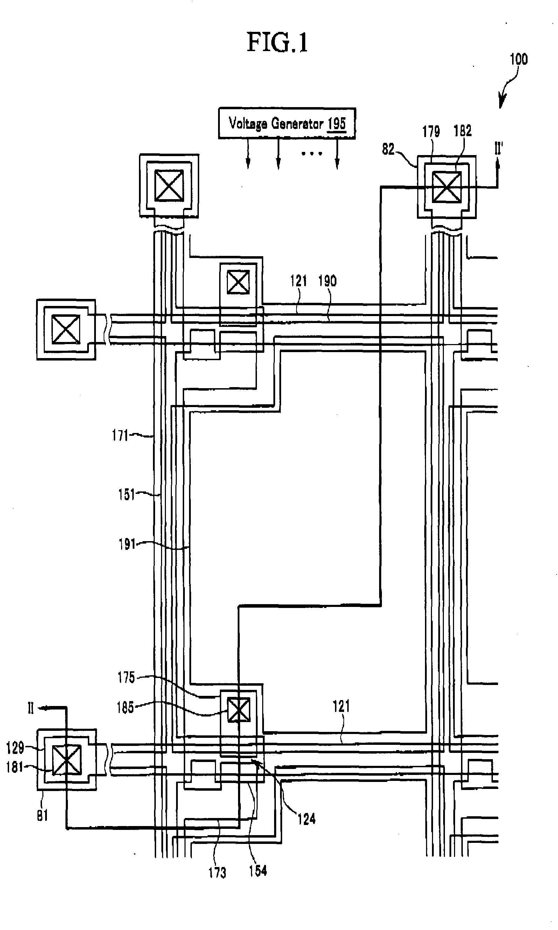

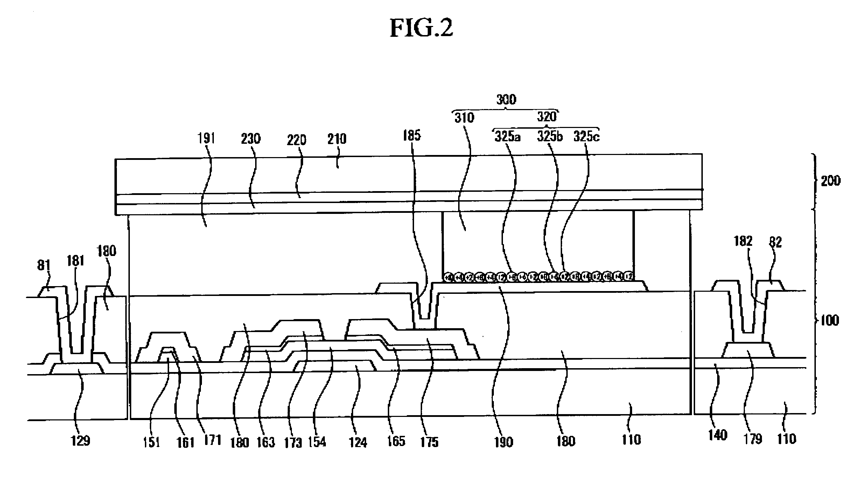

First, an electrophoretic display according to one exemplary embodiment of the present invention will be described in detail with reference to FIGs. 1 and 2. FIG. 1 is a layout view illustrating the electrophoretic display, and FIG. 2 is a cross-sectional view taken along the line II-II' shown in FIG.1. The electrophoretic display includes a thin film transistor array panel 100, a common electrode panel 200, and an electrophoretic member 300 disposed between the panels 100 and 200.

First, the thin film transistor array panel 100 will be described. As shown in FIGs. 1 and 2, a plurality of gate lines 121 transmitting gate signals are formed on an insulation substrate 110 made of transparent glass or a similar material. The gate lines 121 extends substantially in a transverse direction, and each gate line 121 includes a plurality of gate electrodes 124 and also includes an extension ending with an end portion 129 used for making contact to another layer or an external device,

The gate lines 121 are preferably made of aluminum-containing metals such as aluminum or an aluminum alloy, and/or of silver-containing metals such as silver or a silver alloy, and/or of copper-containing metals such as copper or a copper alloy, and/or of molybdenum-containing metals such as molybdenum or a molybdenum alloy, and/or of chromium, titanium, tantalum, and/or other materials, Each gate line 121 includes a lower film and an upper film (not shown) which have different physical characteristics. The upper film is preferably made of a low resistivity metal, e.g. an Al-containing metal such as Al or Al alloy, for reducing signal delay or voltage drop along the gate lines 121. The lower film is preferably made of a material such as Mo, a Mo alloy, and/or Cr, which makes good contact to other materials such as indium tin oxide (ITO) or indium zinc oxide (IZO). A good example is Cr for the lower film and an Al-Nd alloy for the upper film.

The gate lines 121 may have either a single-layer structure or a triple-layer structure.

A gate insulating layer 140 preferably made of silicon nitride (SiNx) is formed on the gate lines 121.

Semiconductor stripes 151, preferably made of hydrogenated amorphous silicon, are formed on the gate insulating layer 140. Each semiconductor stripe 151 extends substantially in the longitudinal direction and has a plurality of projections 154 branching out toward the gate electrodes 124. Each semiconductor stripe 151 is widened near the gate lines 121 to cover large areas of the gate lines 121.

Ohmic contact stripes and islands 161 and 165, preferably made of silicide or n+ hydrogenated a-Si heavily doped with an n-type impurity, are formed on the semiconductor stripes 151. Each ohmic contact stripe 161 has a plurality of projections 163, and the projections 163 and the ohmic contact islands 165 are located in pairs on the projections 154 of the semiconductor stripes 151.

Data lines 171 and drain electrodes 175 are formed on the ohmic contacts 161 and 165, respectively, over the gate insulating layer 140.

The data lines 171, for transmitting data voltages, extend substantially in the longitudinal direction and cross over the gate lines 121. Each data line 171 includes a plurality of source electrodes 173 projecting toward the gate electrodes 124 and curved like a character "J", and also includes at the end a widened extension 179 for making contact to another layer or an external device. In each pair of a source electrode 173 and a drain electrode 175, the source electrode 173 and the drain electrode 175 are spaced from each other and are located opposite each other over a corresponding gate electrode 124.

The data lines 171 and the drain electrodes 175 are preferably made of a refractory metal such as Cr, a molybdenum-containing metal, tantalum, and/or titanium, and may have a multi-layer structure including a lower film (not shown) made of Mo, a Mo alloy, or Cr, and an upper film (not shown) located thereon and made of an Al-containing metal.

A gate electrode 124, a source electrode 173, and a drain electrode 175 along with a projection 154 of a semiconductor stripe 151 form a thin film transistor (TFT) having a channel in the projection 154 between the source electrode 173 and the drain electrode 175.

The ohmic contacts 161 and 165 are interposed between the underlying semiconductor stripes 151 on the one hand and the overlying data lines 171 and drain electrodes 175 on the other hand to reduce the contact resistance therebetween.

The semiconductor stripes 151 include a plurality of exposed portions, which are not covered with the data lines 171 and the drain electrodes 175, such as portions located between the source electrodes 173 and the drain electrodes 175. Although the semiconductor stripes 151 are narrower than the data lines 171 at most places, the semiconductor stripes 151 are widened near the gate lines as described above, to enhance the insulation between the gate lines 121 and the data lines 171.

A passivation layer 180 is a single-layer or multi-layer structure formed on the data lines 171, the drain electrodes 175, and the exposed portions of the semiconductor stripes 151. The passivation layer 180 is preferably made of a photosensitive organic material having good flatness, or a low dielectric insulating material such as a-Si:C:O and a-Si:O:F formed by plasma enhanced chemical vapor deposition (PECVD), or an inorganic material such as silicon nitride. For example, if the passivation layer 180 includes an organic material, the passivation layer 180 can also include an insulating layer (not shown) made of SiNx or SiO₂ under the organic material to prevent the organic material from contacting the semiconductor stripes 151 exposed between the data line 171 and the drain electrode 175,

The passivation layer 180 has a plurality of contact holes 181, 185, and 182 exposing the end portions 129 of the gate lines 121 and the end portions 179 of the drain electrodes 175 and the data lines 171, respectively.

Pixel electrodes 190 and contact assistants 81 and 82, preferably made of ITO or IZO, are formed on the passivation layer 180.

The pixel electrodes 190 are physically and electrically connected to the drain electrodes 175 through the contact holes 185 such that the pixel electrodes 190 receive the data voltages from the drain electrodes 175.

Each pixel electrode 190 can receive at least three positive (+) driving voltages of different magnitudes and at least three negative (-) driving voltages of different magnitudes relative to common electrode 220 on the common electrode panel 200. These voltages change the position of electrophoretic particles 320 dispersed within a dispersion medium 310 so as to represent various colors.

The contact assistants 81/82 are connected to the exposed end portions 129/179 of the gate lines 121/data lines 171 through the contact holes 181/182. The contact assistants 81 and 82 protect the exposed portions of the gate lines 121 and the data lines 171 and enhance the adhesion between these portions and external devices such as integrated circuits which drive the gate lines.

Partitioning walls 191 including at least one organic or inorganic insulator material and separating the pixel electrodes 190 are formed on the passivation layer 180. The partitioning walls 191 surround the pixel electrodes 190 to define pixel volumes filled with the dispersion medium 310 of the electrophoretic member 300.

The electrophoretic member 300 is located in areas overlying the pixel electrodes 190 and surrounded by the partitioning walls 191.

The electrophoretic member 300 includes the dispersion medium 310 and electrophoretic particles 320 dispersed in the dispersion medium 310.

The dispersion medium 310 acts to disperse the electrophoretic particles 320 as the particles move in the medium. In the present exemplary embodiment, the dispersion medium 310 is black, i.e. it absorbs external light in order to represent black.

The electrophoretic particles 320 dispersed in the dispersion medium 310 include first electrophoretic particles 325a, second electrophoretic particles 325b, and third electrophoretic particles 325c, which all have positive charges and are white. In other embodiments, the first to third electrophoretic particle 325a, 325b, and 325c all have negative charges. If the charges are negative, the electrophoretic display can be operated using voltages having the same magnitudes but opposite polarities relative to the electrophoretic display with the positive charges. Operation of the electrophoretic display with the positive charges is explained in detail below.

In the present exemplary embodiment, the dispersion medium 310 is black and the electrophoretic particles 320 are white. In some embodiments, however, the dispersion medium 310 may be white and the electrophoretic particles 320 may be black.

The charge of each second electrophoretic particle 325b and each third electrophoretic particle 325c are respectively about one-half and one-quarter of the charge of each first electrophoretic particle 325a. In FIG. 2, the charges of the first to third electrophoretic particles 325a, 325b, and 325c are shown respectively as +8, +4, and +2 for the purpose of illustration. However, other charge ratios can also be used.

In the present exemplary embodiment, the charges of the first to third electrophoretic particles 325a, 325b, and 325c are different respectively, but the present invention is not limited thereto. That is, the first to third electrophoretic particles 325a, 325b, and 325c may have different mass, volume, or buoyancy, etc. from each other, Having different charge, mass, volume, buoyancy, etc means that the threshold driving voltages to move the first to third electrophoretic particles 325a, 325b, and 325c are different.

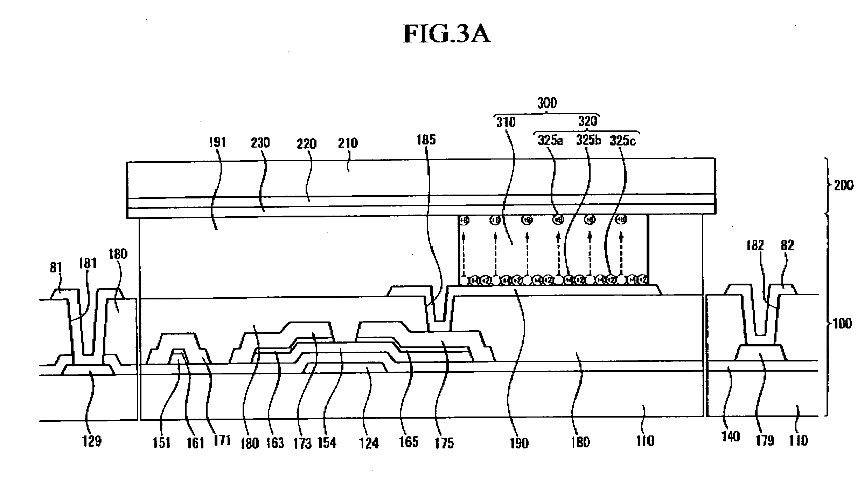

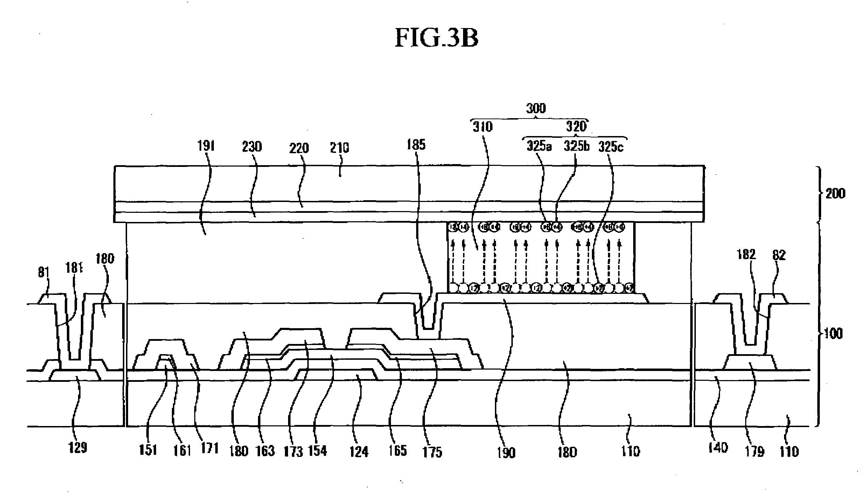

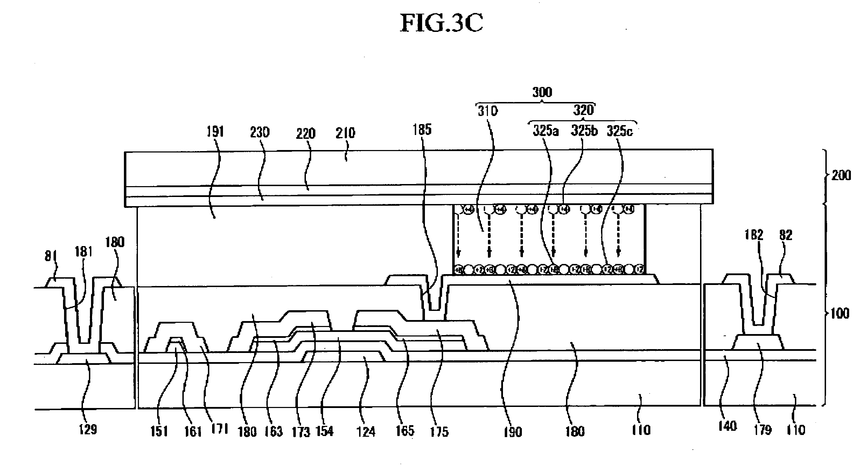

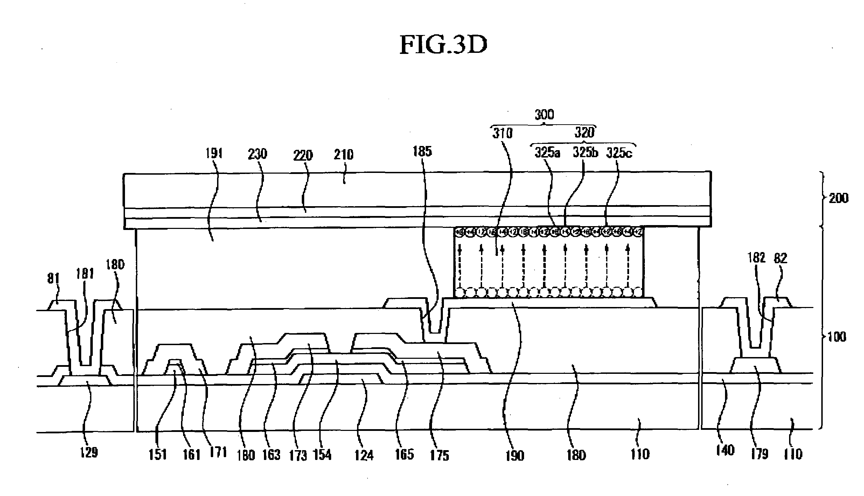

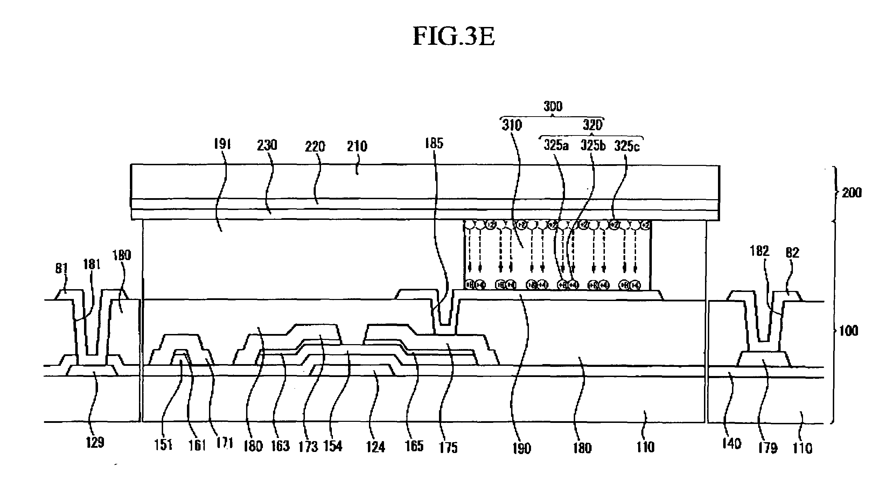

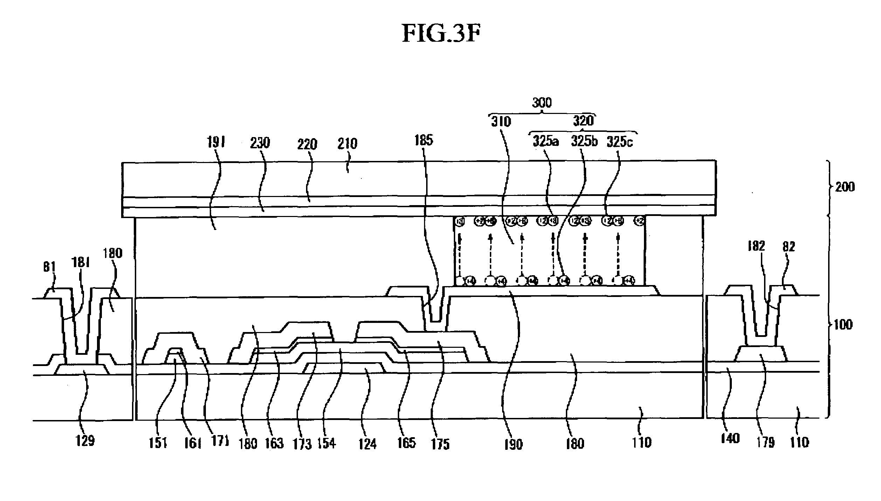

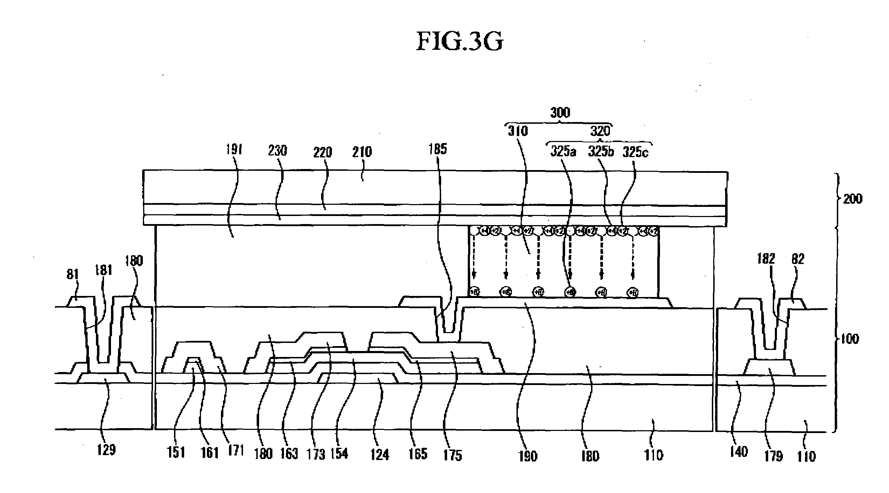

The threshold driving voltages will be described in detail with reference to Fig. 3.

In FIG. 2 the number of the first electrophoretic particles 325a is the same as the number of the second electrophoretic particles 325b, and is the same as the number of the third electrophoretic particles 325c. In some embodiments, however, the number of the second electrophoretic particles 325b and the number of the third electrophoretic particles 325c are respectively about twice and four times larger than the number of the first electrophoretic particles 325a. These numbers can be varied as needed based on the desired gamut of grey levels capable of being displayed using the first to third electrophoretic particles 325a, 325b, and 325c. In some embodiments, for example, the number of second electrophoretic particles 325b is equal to the number of the third electrophoretic particles 325c and to the number of first electrophoretic particles 325a, and the size of each second electrophoretic particle 325b and the size of each third electrophoretic particle 325c are respectively about twice and four times the size of each first electrophoretic particles 325a. Other ratios among the numbers and/or sizes of the electrophoretic particles 325a, 325b, and 325c are also possible.

Now the common electrode panel 200 disposed opposite to the thin film transistor array panel 100 will be described.

The common electrode panel 200 is in tight contact with the partitioning walls 191 to prevent leakage of the dispersion medium 310 from the areas overlying the pixel electrodes 190 and surrounded by the partitioning walls 191. The common electrode panel 200 includes an insulation substrate 210 and also includes a common electrode 220 and an organic film 230 sequentially formed on the insulation substrate 210.

The common electrode 220 is a transparent electrode made of ITO or IZO, and applies a common voltage to the electrophoretic member 300.

The organic film 230 is a transparent film formed on the common electrode 220 in order to increase the adhesion between the common electrode panel 200 and the partitioning walls 191, The organic film 230 may be omitted.

Voltage generating circuit 195 (FIG. 1) generates voltages for gate lines 121, data lines 171, and common electrode 200 to provide the driving voltages described above and below.

Now a method for driving an electrophoretic display according to one exemplary embodiment of the present invention will be described with reference to FIGs. 2 and 3A to 3G. This method can be used to display eight black-and-white (grey) brightness levels at each pixel.

FIGs. 3A to 3G are cross-sectional views of the electrophoretic display which illustrate the method for driving the electrophoretic display according to the exemplary embodiment. Hereinafter, the threshold driving voltages mentioned with respect to FIGs. 3A to 3G mean voltage differences applied between the pixel electrodes 190 and the common electrode 220 to move the first to third electrophoretic particles 325a, 325b, and 325c from the common electrode 220 to the pixel electrode 190 or from the pixel electrode 190 to the common electrode 220 after overcoming the fluid resistance caused by the dispersion medium 310. That is, the first to third electrophoretic particle 325a, 325b, and 325c have different threshold driving voltages, respectively. Each of the first to third electrophoretic particles 325a, 325b, and 325c can move when a voltage bigger than the respective threshold drivings voltages is applied between the pixel electrode 190 and the common electrode 220.The method employs up to six different threshold driving voltages (first to sixth threshold driving voltages). Each of these threshold driving voltages is a value obtained by subtracting a pixel electrode's potential from the common electrode's potential. The six threshold driving voltages are defined as follows,

The first threshold driving voltage is a positive (+) voltage that allows all of the first to third electrophoretic particles 325a, 325b, and 325c, with their different charges, to overcome the fluid resistance caused by the dispersion medium 310 and thus move to the pixel electrode 190 from the common electrode 220.

The second threshold driving voltage is a positive (+) voltage that allows the first electrophoretic particles 325a, having the greatest charge, and the second electrophoretic particles 325b, having the second greatest charge, but not the third electrophoretic particles 325c, to overcome the fluid resistance caused by the dispersion medium 310 and move to the pixel electrode 190 from the common electrode 220.

The third threshold driving voltage is a positive (+) voltage that allows only the first electrophoretic particles 325a, having the greatest charge, but not the second or third electrophoretic particles 325b and 325c, to overcome the fluid resistance caused by the dispersion medium 310 and move to the pixel electrode 190 from the common electrode 220,

The fourth threshold driving voltage is a negative (-) voltage that allows only the first electrophoretic particles 325a, having the greatest charge, but not the second or third electrophoretic particles 325b, 325c, to overcome the fluid resistance caused by the dispersion medium 310 and move to the common electrode 220 from the pixel electrode 190.

The fifth threshold driving voltage is a negative (-) voltage that allows the first electrophoretic particles 325a, having the greatest charge, and the second electrophoretic particles 325b, having the second greatest charge, but not the third electrophoretic particles 325c, to overcome the fluid resistance caused by the dispersion medium 310 and move to the common electrode 220 from the pixel electrode 190.

The sixth threshold driving voltage is a negative (-) voltage that allows all of the first to third electrophoretic particles 325a, 325b, and 325c to overcome the fluid resistance caused by the dispersion medium 310 and move to the common electrode 220 from the pixel electrode 190.

Illustrative values of the first to sixth threshold driving voltages are +15V, +10V, +5V, -5V, -10V, and -15V respectively. Other threshold driving voltages can also be used,

First, the method for driving the electrophoretic display to provide the first color will be described.

As shown in FIG. 2, when the first threshold driving voltage (+15V) is provided between a pixel electrode 190 and the common electrode 220, all of the first to third electrophoretic particles 325a, 325b, and 325c move to the pixel electrode 190. Accordingly, all of the external light incident through the common electrode panel 200 from the outside is absorbed by the dispersion medium 310, so the pixel area displays the first color which is the darkest black color.

Next, a method for driving the electrophoretic display to provide the second color will be described.

As shown in FIG. 3A, when the fourth threshold driving voltage (-5V) is provided between the pixel electrode 190 and the common electrode 220 immediately after displaying the first color, only the first electrophoretic particles 325a, having the greatest charge, move to the common electrode 220 from the pixel electrode 190. Accordingly, part of the external light incident through the common electrode panel 200 from the outside is absorbed by the dispersion medium 310, and the rest of the external light is reflected outward by the first electrophoretic particles 325a which have moved to the common electrode 220 to thus contribute to the image formed by the display. Accordingly, the pixel displays the second color which is brighter than black of the first color.

Next, a method for driving the electrophoretic display to provide the fourth color will be described,

As shown in FIG. 313, when the fifth threshold driving voltage (-10V) is provided between the pixel electrode 190 and the common electrode 220 immediately after displaying the first color, the first electrophoretic particles 325a, having the greatest charge, and the second electrophoretic particles 325b, having the next greatest charge, move to the common electrode 220 from the pixel electrode 190.

Accordingly, part of the external light incident through the common electrode panel 200 from the outside is absorbed by the dispersion medium 310, and the rest of the external light is reflected outward by the first electrophoretic particles 325a and the second electrophoretic particles 325b which have moved to the common electrode 220 to thus contribute to displayed image. At this stage, the electrophoretic particles reflecting the external light are the first electrophoretic particles 325a and the second electrophoretic particles 325b. Therefore, the fourth color displayed by the pixel is brighter than the second color.

Next, a method for driving the electrophoretic display to provide the third color will be described.

As shown in FIG. 3C, when the third threshold driving voltage (+5V) is provided between the pixel electrode 190 and the common electrode 220 immediately after displaying the fourth color, only the first electrophoretic particles 325a, having the greatest charge, move back to the pixel electrode 190 from the common electrode 220.

Accordingly, part of the external light incident through the common electrode panel 200 from the outside is absorbed by the dispersion medium 310, and the rest of the external light is reflected outward by the second electrophoretic particles 325b remaining at the common electrode 220 and thus contributing to the displayed image, At this stage, the number of the second electrophoretic particles reflecting the external light is greater than that of the first electrophoretic particles but less than the total number of the first electrophoretic particles 325a and second electrophoretic particles 325b. Accordingly, the third color displayed by the pixel is brighter than the second color and darker than the fourth color.

Next, a method for driving the electrophoretic display to provide the eighth color will be described.

As shown in FIG. 3D, when the sixth threshold driving voltage (-15V) is provided between the pixel electrode 190 and the common electrode 220 after displaying the first color, all of the first to third electrophoretic particles 325a, 325b, and 325c move to the common electrode 220 from the pixel electrode 190. Accordingly, most of the external light incident through the common electrode panel 200 from the outside is reflected outward by the first to third electrophoretic particles 325a, 325b, and 325c, which thus all contribute to the displayed image to display the eighth, brightest, color.

Next, a method for driving the electrophoretic display to provide the fifth color will be described.

As shown in FIG. 3E, when the second threshold driving voltage (+10V) is provided between the pixel electrode 190 and the common electrode 220 immediately after displaying the eighth color, the first electrophoretic particles 325a, having the greatest charge, and the second electrophoretic particles 325b, having the next greatest charge, move to the pixel electrode 190 from the common electrode 220.

Accordingly, part of the external light incident through the common electrode panel 200 from the outside is absorbed by the dispersion medium 310, and the rest of the external light is reflected outward by the third electrophoretic particles 325c remaining at the common electrode 220 to contribute to the displayed image. At this stage, the number of the third electrophoretic particles 325c reflecting the external light is greater than the total number of the first electrophoretic particles 325a and the second electrophoretic particles 325b, so the fifth color displayed by the pixel is brighter than the fourth color.

Next, a method for driving the electrophoretic display to provide the sixth color will be described.

As shown in FIG. 3F, when the fourth threshold driving voltage (-5V) is provided between the pixel electrode 190 and the common electrode 220 immediately after displaying the fifth color, the first electrophoretic particles 325a, having the greatest charge, move back to the common electrode 220 from the pixel electrode 190.

Accordingly, part of the external light incident through the common electrode panel 200 from the outside is absorbed by the dispersion medium 310, and the rest of the external light is reflected outward by the first electrophoretic particles 325a and the third electrophoretic particles 325c, which thus contribute to the displayed image. At this stage, the external light is reflected by the third electrophoretic particles 325c and the first electrophoretic particles 325a. Therefore, the sixth color displayed by the pixel is brighter than the fifth color.

Next, a method for driving the electrophoretic display to provide the seventh color will be described.

As shown in FIG. 3G, when the third threshold driving voltage (+5V) is provided between the pixel electrode 190 and the common electrode 220 immediately after displaying the eighth color, only the first electrophoretic particles 325a, having the greatest charge, move back to the pixel electrode 190 from the common electrode 220.

Accordingly, part of the external light incident through the common electrode panel 200 from the outside is absorbed by the dispersion medium 310, and the rest of the external light is reflected outward by the second electrophoretic particles 325b and the third electrophoretic particles 325c, which thus contribute to the displayed image. At this stage, the total number of the second electrophoretic particles 325b and the third electrophoretic particles 325c reflecting the external light to display white color is greater than the total number of the first electrophoretic particles 325a and the third electrophoretic particles 325c, but less than the total number of the first to third electrophoretic particles 325a, 325b, and 325c. Accordingly, the seventh color displayed by the pixel is brighter than the sixth color and darker than the eighth color.

As seen from the above, each pixel is able to represent eight white (grey) brightness levels, corresponding to the first to eighth colors described above, with the first color corresponding to the lowest brightness and the eighth color corresponding to the highest brightness. The ability to display different brightness levels is advantageous in the electrophoretic display.

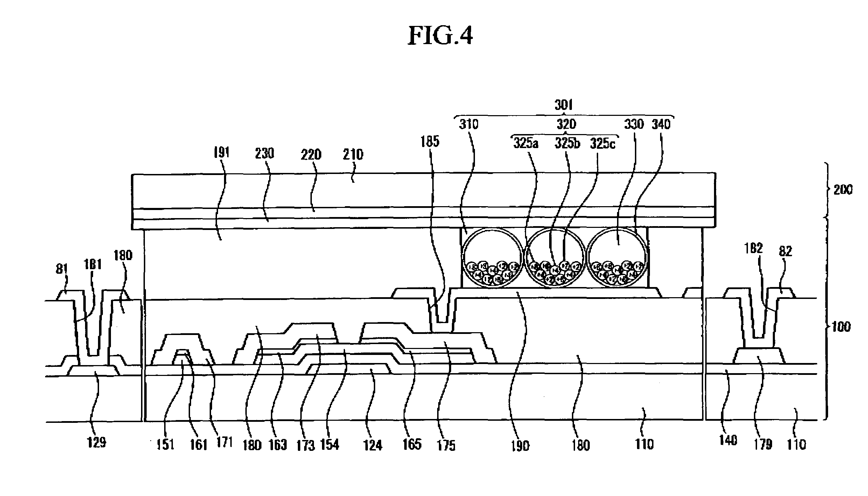

Now an electrophoretic display according to another exemplary embodiment of the present invention will be described with reference to FIG. 4,

The electrophoretic display according to this exemplary embodiment is identical to the electrophoretic display of FIGS. 1 and 2, except that electrophoretic member 301 of FIG. 4 includes an additional dispersion medium 330 and capsules 340,

The additional dispersion medium 330 in each capsule 340 disperses the electrophoretic particles 320 in the capsule. Each capsule 340 confines its electrophoretic particles 320 and its dispersion medium 330. The additional dispersion medium 330 may be black. If the additional dispersion medium 330 is black, the dispersion medium 310 dispersing the capsules 340 may be omitted,

The electrophoretic display according to the present exemplary embodiment can be operated using the same method as the electrophoretic display shown in FIGs. 1 and 2, as described above in connection with FIGs. 3A to 3G. Therefore, a detailed description of the operation of the electrophoretic display of FIG. 4 will be omitted,

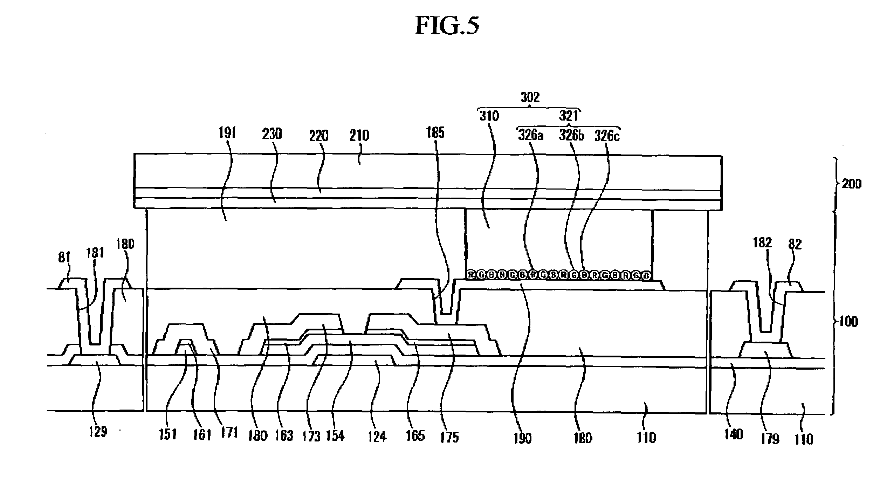

Now an electrophoretic display according to another exemplary embodiment of the present invention will be described with reference to FIG. 5. FIG. 5 is a cross-sectional view of the electrophoretic display. The electrophoretic display of FIG. 5 is identical to the electrophoretic display of FIGs. 1 and 2, except that in electrophoretic member 302 of FIG, 5 the first, second, and third electrophoretic particles 326a, 326b, and 326c are respectively red, green, and blue in color, and are substantially identical in size and number.

In some other embodiments, the first to third electrophoretic particles 326a, 326b, and 326c all have negative charges. If the charges are negative, the electrophoretic display can be operated using voltages having the same magnitudes but opposite polarities with respect to the voltages used for the positive charges. Operation of the electrophoretic display in the case of the positive charges is explained in detail below.

The charge of each second electrophoretic particle 326b and the charge of each third electrophoretic particle 326c are respectively about one-half and one-quarter of the charge of each first electrophoretic particle 326a. However, other charge ratios can also be used,

Unlike some embodiments described above in connection with FIGs. 1 and 2, the number and size of the second electrophoretic particles 326b in some embodiments of the electrophoretic display of FIG. 5 are substantially the same as the number and size of the third electrophoretic particles 326c and are substantially the same as the number and size of the first electrophoretic particles 326a.

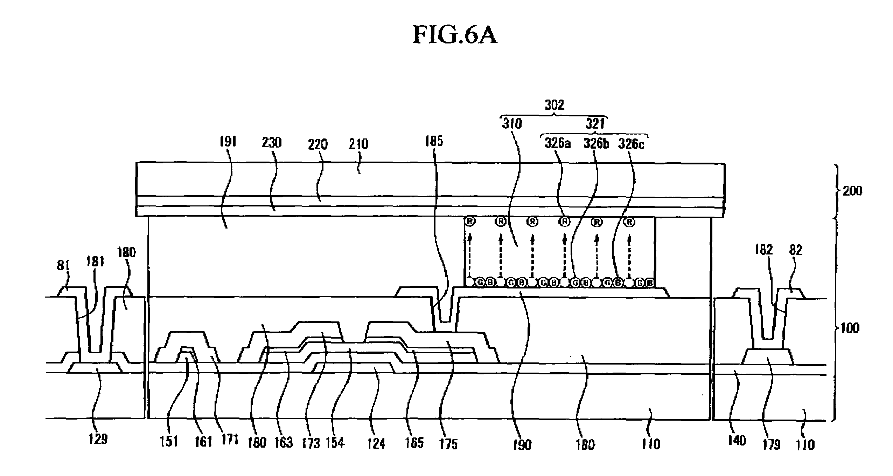

Now the method for driving the electrophoretic display according to the present exemplary embodiment of the present invention will be described with reference to FIG. 5 and FIGs. 6A to 6G. This method allows display of eighth colors (called respectively first to eighth colors below) at each pixel.

FIGs. 6A to 6G are cross-sectional views of the electrophoretic display which illustrate the method for driving the electrophoretic display according to the exemplary embodiment.

The first to eighth colors mentioned above with respect to FIGs. 6A to 6G are black, red, green, yellow, blue, magenta, cyan, and white, respectively.

The threshold driving voltages mentioned below with respect to FIGs. 6A to 6G represent values obtained by subtracting a pixel electrode's potential from the common electrode's potential. These threshold voltages are as follows.

The first threshold driving voltage is a positive (+) voltage that allows all of the first to third electrophoretic particles 326a, 326b, and 326c, regardless of their charges, to overcome the fluid resistance caused by the dispersion medium 310 and move to the pixel electrode 190 from the common electrode 220.

The second threshold driving voltage is a positive (+) voltage that allows the first electrophoretic particles 326a, having the greatest charge, and the second electrophoretic particles 326b, having the next greatest charge, but not the third electrophoretic particles 326c, to overcome the fluid resistance caused by the dispersion medium 310 and move to the pixel electrode 190 from the common electrode 220.

The third threshold driving voltage is a positive (+) voltage that allows only the first electrophoretic particles 326a, having the greatest charge, but not the second or third electrophoretic particles 326b, 326c, to overcome the fluid resistance caused by the dispersion medium 310 and move to the pixel electrode 190 from the common electrode 220.

The fourth threshold driving voltage is a negative (-) voltage that allows only the first electrophoretic particles 326a, having the greatest charge, but not the second or third electrophoretic particles 326b, 326c, to overcome the fluid resistance caused by the dispersion medium 310 and move to the common electrode 220 from the pixel electrode 190.

The fifth threshold driving voltage is a negative (-) voltage that allows the first electrophoretic particles 326a, having the greatest charge, and the second electrophoretic particles 326b, having the next greatest charge, but not the third electrophoretic particles 326c to overcome the fluid resistance caused by the dispersion medium 310 and move to the common electrode 220 from the pixel electrode 190.

The sixth threshold driving voltage is a negative (-) voltage that allows all of the first to third electrophoretic particles 326a, 326b, and 326c to overcome the fluid resistance caused by the dispersion medium 310 and move to the common electrode 220 from the pixel electrode 190.

Illustrative values of the first to sixth threshold driving voltages are +15V, +10V, +5V, -5V, -10V, and -15V respectively. Other threshold driving voltages can also be used.

Now a method will be described for driving the electrophoretic display to provide the first color at a pixel.

As shown in FIG. 5, when the first threshold driving voltage (+15V) is provided between a pixel electrode 190 and the common electrode 220, all of the first to third electrophoretic particles 326a, 326b, and 326c move to the pixel electrode 190. Accordingly, external light incident through the common electrode panel 200 from the outside is absorbed by the dispersion medium 310, so the pixel area displays the first color, which is black.

Next, a method will be described for driving the electrophoretic display to provide the second color. As shown in FIG. 6A, when the fourth threshold driving voltage (-5V) is provided between the pixel electrode 190 and the common electrode 220 immediately after displaying the first color, only the first electrophoretic particles 326a, having the greatest charge, move to the common electrode 220 from the pixel electrode 190. Accordingly, part of the external light incident through the common electrode panel 200 from the outside is reflected outward by the first electrophoretic particles 326a which moved to the common electrode 220, to thus display red which is the second color. This is the color of the first electrophoretic particles 326a.

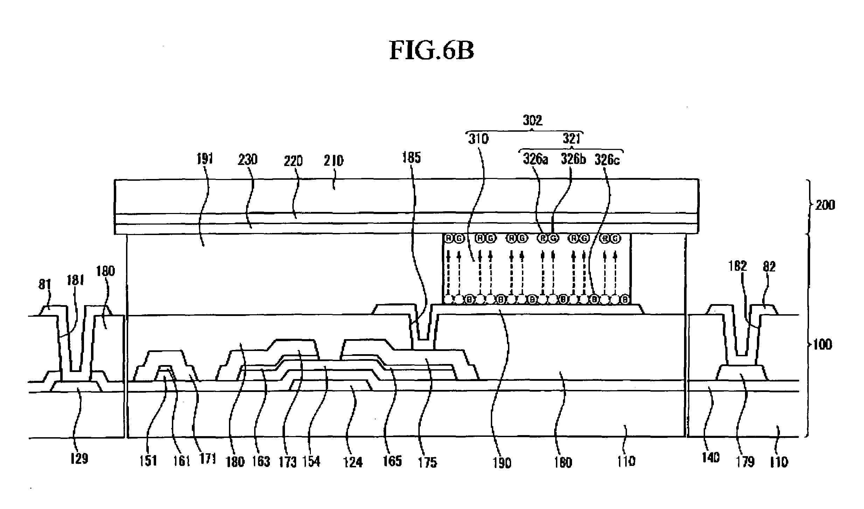

Next, a method for driving the electrophoretic display to provide the fourth color will be described. As shown in FIG. 6B, when the fifth threshold driving voltage (-10V) is provided between the pixel electrode 190 and the common electrode 220 immediately after displaying the first color, the first electrophoretic particles 326a, having the greatest charge, and the second electrophoretic particles 326b, having the next greatest charge, move to the common electrode 220 from the pixel electrode 190,

Accordingly, part of the external light incident through the common electrode panel 200 from the outside is reflected outward by the first electrophoretic particles 326a and the second electrophoretic particles 326b which moved to the common electrode 220, to thus display red and green, respectively. As a result, the pixel area displays yellow, the fourth color, which is a mixture of red and green.

Next, a method for driving the electrophoretic display to provide the third color will be described.

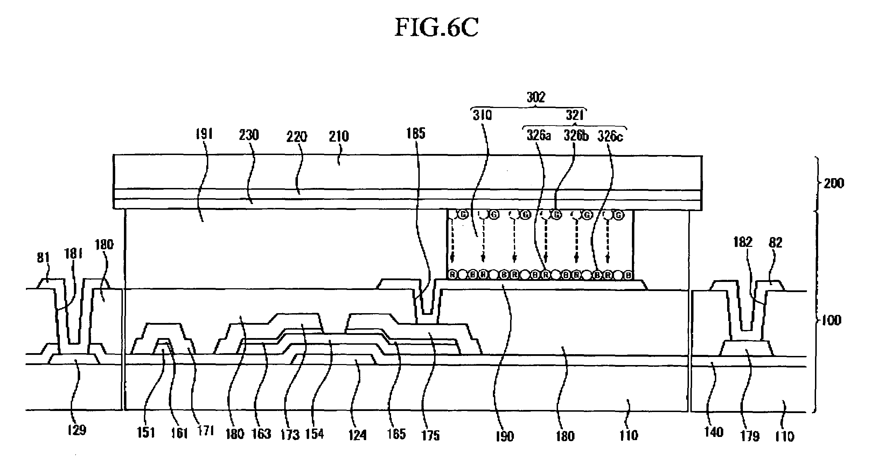

As shown in FIG. 6C, when the third threshold driving voltage (+5V) is provided between the pixel electrode 190 and the common electrode 220 immediately after displaying the fourth color, only the first electrophoretic particles 326a, having the greatest charge, move back to the pixel electrode 190 from the common electrode 220.

Accordingly, part of the external light incident through the common electrode panel 200 from the outside is reflected outward by the second electrophoretic particles 326b remaining at the common electrode 220, Consequently, the pixel area displays green color which is the second color and is the color of the second electrophoretic particles 326a.

Next, a method for driving the electrophoretic display to provide the eighth color will be described.

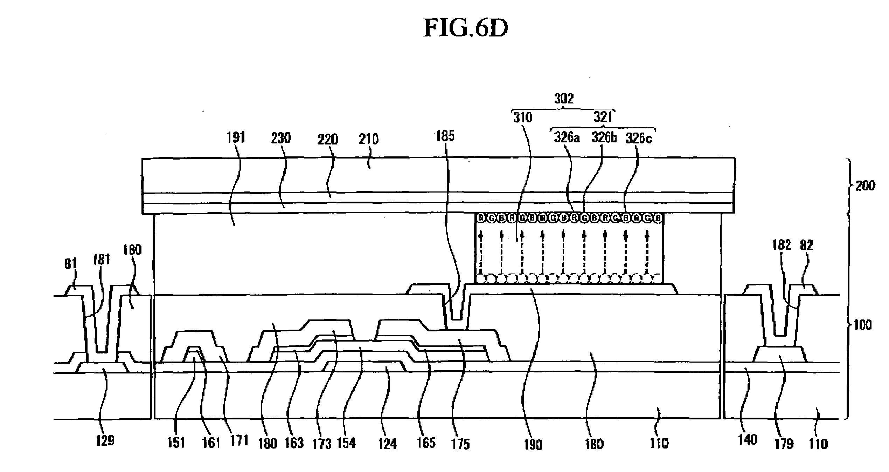

As shown in FIG. 6D, when the sixth threshold driving voltage (-15V) is provided between the pixel electrode 190 and the common electrode 220 after displaying the first color, all of the first to third electrophoretic particles 326a, 326b, and 326c move to the common electrode 220 from the pixel electrode 190. Accordingly, most of the external light incident through the common electrode panel 200 from the outside is reflected outward by the first to third electrophoretic particles 326a, 326b, and 326c. As a result, the pixel area displays white, the eighth color, which is a mixture of red, green, and blue.

Next, a method for driving the electrophoretic display to provide the fifth color will be described.

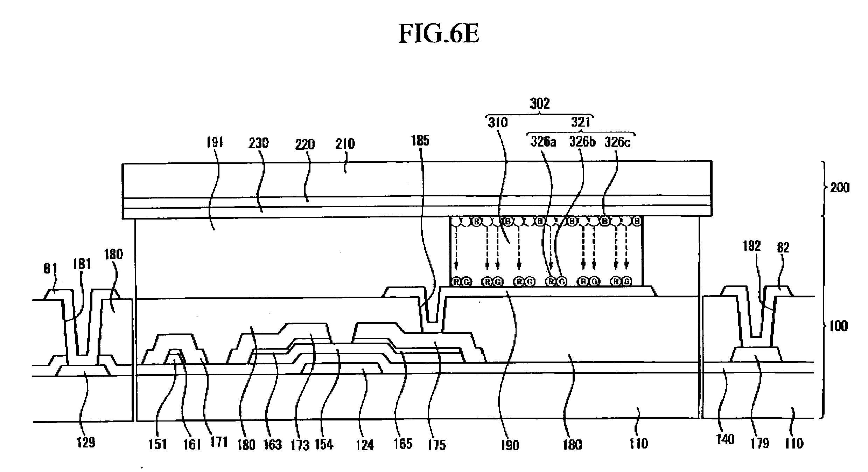

As shown in FIG. 6E, when the second threshold driving voltage (+10V) is provided between the pixel electrode 190 and the common electrode 220 immediately after displaying the eighth color, the first electrophoretic particles 326a, having the greatest charge, and the second electrophoretic particles 326b, having the next greatest charge, move to the pixel electrode 190 from the common electrode 220.

Accordingly, part of the external light incident through the common electrode panel 200 from the outside is reflected outward by the third electrophoretic particles 326c remaining at the common electrode 220. As a result, the pixel area displays blue, the fifth color, which is the color of the third electrophoretic particles 326c.

Next, a method for driving the electrophoretic display to provide the sixth color will be described.

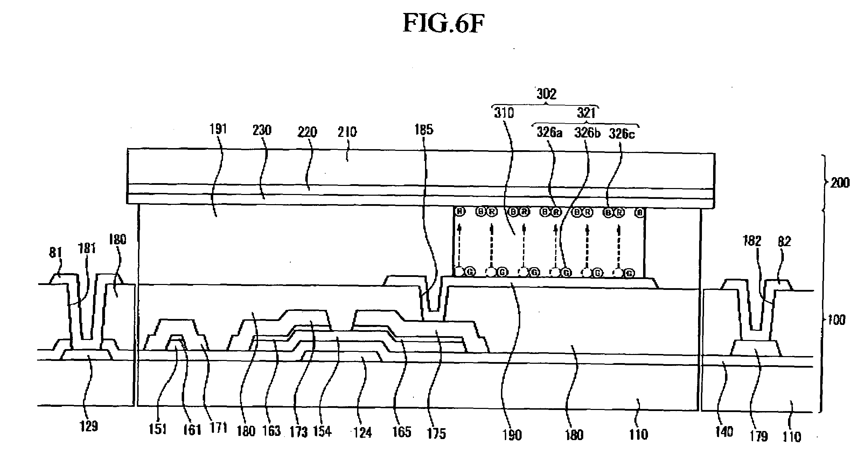

As shown in FIG. 6F, when the fourth threshold driving voltage (-5V) is provided between the pixel electrode 190 and the common electrode 220 immediately after displaying the fifth color, only the first electrophoretic particles 326a, having the greatest charge, move back to the common electrode 220 from the pixel electrode 190.

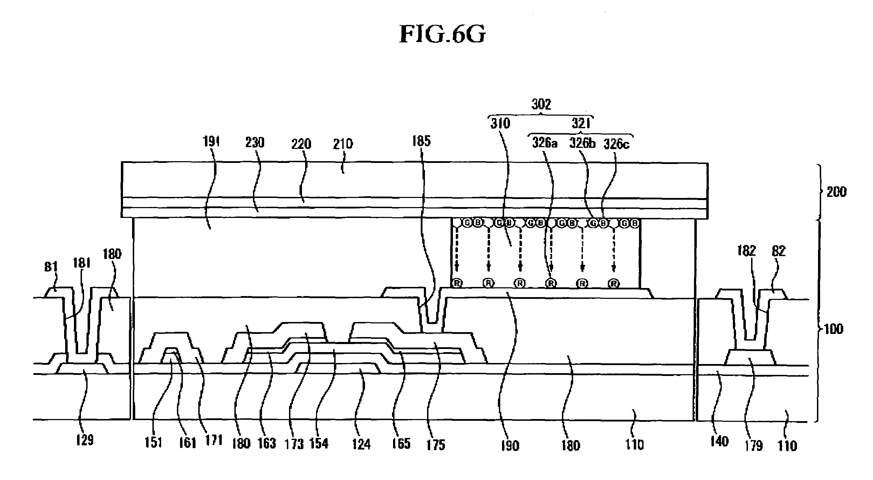

Accordingly, part of the external light incident through the common electrode panel 200 from the outside is reflected outward by the first electrophoretic particles 326a and the third electrophoretic particles 326c to thus display red and blue, respectively. As a result, the pixel area displays magenta, the sixth color, which is a mixture of red and blue.
Next, a method for driving the electrophoretic display to provide the seventh color will be described. As shown in FIG. 6G, when the third threshold driving voltage (+5V) is provided between the pixel electrode 190 and the common electrode 220 immediately after displaying the eighth color, only the first electrophoretic particles 326a, having the greatest charge, move back to the pixel electrode 190 from the common electrode 220, Accordingly, part of the external light incident through the common electrode panel 200 from the outside is reflected outward by the second electrophoretic particles 326b and the third electrophoretic particles 326c to thus display green and blue, respectively. As a result, the pixel area displays cyan, the seventh color, which is a mixture of green and blue.

As seen from the above, each pixel can represent eight different colors, i.e. the first color through the eighth color, which is the brightest color, via an application of at least one of the first to sixth threshold driving voltages.

Thus, advantageously, the electrophoretic display operated as in FIG. 5 and FIGs. 6A to 6G can display a large number of colors.

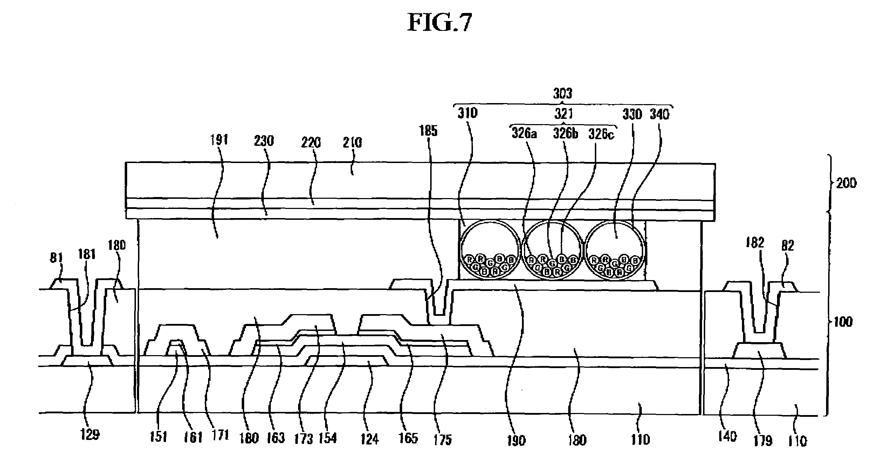

Now an electrophoretic display according to another exemplary embodiment of the present invention will be described with reference to FIG. 7.

FIG. 7 is a cross-sectional view of the electrophoretic display according to this exemplary embodiment,

The electrophoretic display of FIG. 7 is identical to the electrophoretic display of FIG. 5, except that electrophoretic member 303 of FIG. 7 includes an additional dispersion medium 330 in capsules 340.

The additional dispersion medium 330 in each capsule 340 disperses the electrophoretic particles 321 in the capsule. Each capsule 340 confines its electrophoretic particles 321 and its dispersion medium 330. If the additional dispersion medium 330 is black, the dispersion medium 310 dispersing the capsules 340 may be omitted.

The electrophoretic display according to FIG. 7 can be operated using the same method as the electrophoretic display of FIG. 5, Therefore a detailed description of operation of the electrophoretic display of Fig. 7 will be omitted.

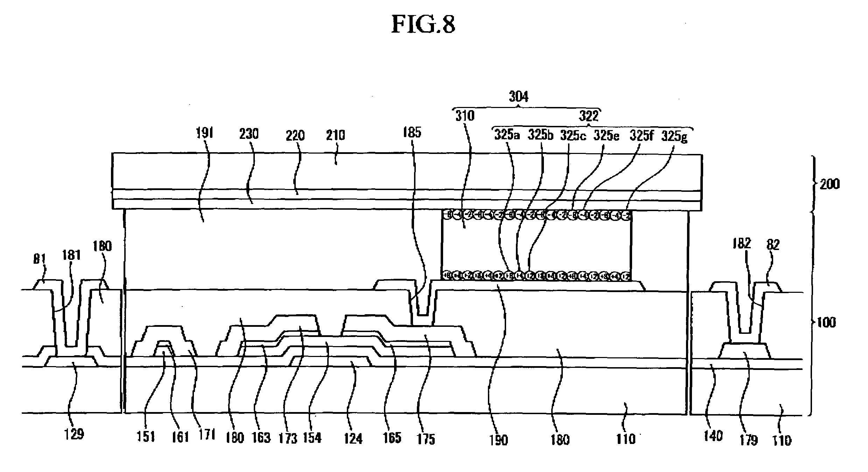

Now an electrophoretic display according to another exemplary embodiment of the present invention will be described with reference to FIG. 8.

FIG. 8 is a cross-sectional view of the electrophoretic display.

The electrophoretic display of FIG. 8 is identical to the electrophoretic display of PIGs.1 and 2, except that electrophoretic particles 322 of an electrophoretic member 304 of the electrophoretic display of FIG. 8 include additional black, negatively charged particles 325e ("fifth electrophoretic particles"), 325f ("sixth electrophoretic particles") and 325g ("seventh electrophoretic particles"). These particles are provided in addition to the first electrophoretic particles 325a, second electrophoretic particles 325b, and third electrophoretic particles 325c.

In other embodiments, the first to third electrophoretic particles 325a, 325b, and 325c are all negatively charged, and the fifth to seventh electrophoretic particles 325e, 325f, and 325g are all positively charged.

The charge of each sixth electrophoretic particle 325f and each seventh electrophoretic particles 325g are respectfully about one-half and one-quarter of the charge of each fifth electrophoretic particles 325e. The charge of each first electrophoretic particle 325a is about the same as the charge of each fifth electrophoretic particles 325e. In FIG. 8, the charges of the fifth to seventh electrophoretic particles 325e, 325f, and 325g are shown as -8, -4, and -2, respectively, for the convenience of understanding. However, other charge ratios can be used for the fifth to seventh electrophoretic particles 325e, 325f, and 325g.

In FIG. 8, the number of the fifth electrophoretic particles 325e is the same as for the electrophoretic particles 325f and the same as for the seventh electrophoretic particles 325g, but in practice, in some embodiments the number of the sixth electrophoretic particles 325f and the number of the seventh electrophoretic particles 325g are respectively about twice and four times larger than the number of the fifth electrophoretic particles 325e. This is done to make the numbers of the fifth, sixth, and seventh electrophoretic particles consistent with the numbers of the first to third electrophoretic particles 325a, 325b, and 325c. In some other embodiments, the number of the sixth electrophoretic particles 325f and the number of the seventh electrophoretic particles 325g may each be substantially equal to the number of the fifth electrophoretic particles 325e, and the size of each sixth electrophoretic particle 325f and the size of each seventh electrophoretic particle 325g may respectively be about twice and four times larger than the size of each fifth electrophoretic particle 325e. The numbers and sizes of the fifth to seventh electrophoretic particles 325e, 325f, and 325g may also be set to other ratios.

In some embodiments, the electrophoretic display of FIG. 8 is operated using a method identical to the method described above for driving the electrophoretic display of FIGs. 1 and 2, except that the electrophoretic member 304 can display additional black-and-white gray levels depending on the position of the fifth to seventh electrophoretic particles 325e, 325f, and 325g. Of note, the electric field pushes these particles in the opposite direction relative to the first to third electrophoretic particles 325a, 325b, and 325c. In view of its similarity to the operation of the electrophoretic display of FIGs. 1 and 2, a detailed description of the operation of the electrophoretic display of FIG. 8 will be omitted.

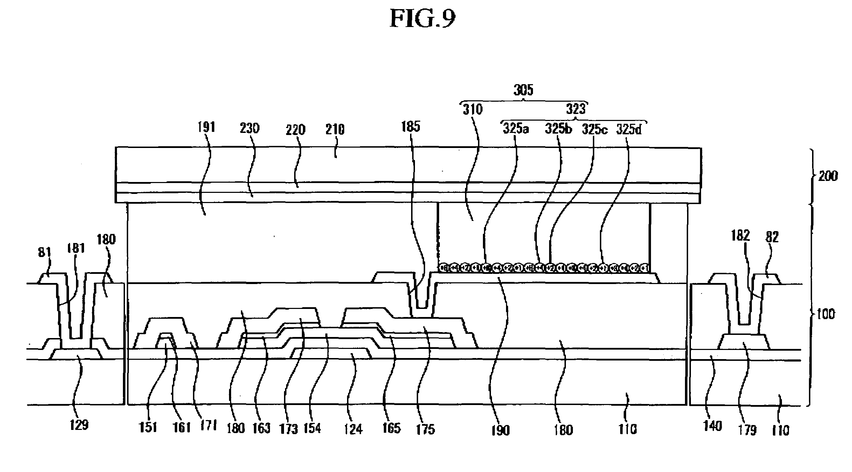

An electrophoretic display according to another exemplary embodiment of the present invention is shown in FIG. 9.

FIG. 9 is a cross-sectional view of the electrophoretic display.

The electrophoretic display of FIG. 9 is identical to the electrophoretic display of FIGs.1 and 2, except that electrophoretic particles 323 of electrophoretic member 305 of FIG. 9 include additional ("fourth") white-colored electrophoretic particles 325d.

The charge of each fourth electrophoretic particle 325d is about one eighth of the charge of each first electrophoretic particle 325a. In FIG. 9, the charges of the first to fourth electrophoretic particles 325a, 325b, 325c, and 325d are shown respectively as +8, +4, +2, and +1 for the convenience of understanding. However, the numbers, charges or sizes of the electrophoretic particles 325a, 325b, 325c, and 325d may be set to other ratios.

Although FIG. 9 shows equal numbers of each of the first to fourth electrophoretic particles 325a, 325b, 325c, and 325d, in some embodiments the number of the second electrophoretic particles 325b, the number of the third electrophoretic particles 325c, and the number of the fourth electrophoretic particles 325d are respectively about twice, four times, and eight times larger than the number of the first electrophoretic particles 325a. The respective numbers of these different types of the electrophoretic particles may vary relative to each other, and can be chosen based on the desired grey levels that the electrophoretic display is to reproduce. For example, the number of the second electrophoretic particles 325b, the number of the third electrophoretic particles 325c, and the number of the fourth electrophoretic particles 325d may each be substantially the same as the number of the first electrophoretic particles 325a, and the size of each second electrophoretic particle 325b, the size of each third electrophoretic particle 325c, and the size of each fourth electrophoretic particle 325d may respectively be about twice, four times, and eight times as large as the size of each first electrophoretic particle 325a. Other relationships between the numbers or sizes of the first to fourth electrophoretic particles 325a, 325b, 325c, and 325d are also possible.

Advantageously, the addition of the fourth electrophoretic particles 325d in FIG. 9 makes it possible to display sixteen colors from the first, darkest, black color, and up to the sixteenth, white color.

Now a method for driving the electrophoretic display of FIG. 9 will be described. This method is suitable to display 16 black and white colors at each pixel. The first to eighth threshold driving voltages mentioned with respect to FIG. 9 each represent a value obtained by subtracting a pixel electrode's potential from the common electrode's potential.

The first threshold driving voltage is a positive (+) voltage that allows all of the first to fourth electrophoretic particles 325a, 325b, 325c, and 325d, with their different charges, to overcome the fluid resistance caused by the dispersion medium 310 and move to the pixel electrode 190 from the common electrode 220.

The second threshold driving voltage is a positive (+) voltage that allows only the first to third electrophoretic particles 325a, 325b, and 325c, but not the fourth electrophoretic particles 325d, to overcome the fluid resistance caused by the dispersion medium 310 and move to the pixel electrode 190 from the common electrode 220.

The third threshold driving voltage is a positive (+) voltage that allows the first electrophoretic particles 325a, having the greatest charge, and the second electrophoretic particles 325b, having the next greatest charge, but not the third or fourth electrophoretic particles 325c, 325d, to overcome the fluid resistance caused by the dispersion medium 310 and move to the pixel electrode 190 from the common electrode 220,

The fourth threshold driving voltage is a positive (+) voltage that allows the first electrophoretic particles 325a, having the greatest charge, but not the second to fourth electrophoretic particles 325b, 325c, 325d, to overcome the fluid resistance caused by the dispersion medium 310 and move to the pixel electrode 190 from common electrode 220.

The fifth threshold driving voltage is a negative (-) voltage that allows only the first electrophoretic particles 325a, having the greatest charge, but not the second to fourth electrophoretic particles 325b, 325c, 325d, to overcome the fluid resistance caused by the dispersion medium 310 and move to the common electrode 220 from the pixel electrode 190.

The sixth threshold driving voltage is a negative (-) voltage that allows the first electrophoretic particles 325a, having the greatest charge, and the second electrophoretic particles 325b, having the next greatest charge, but not the third and fourth electrophoretic particles 325c, 325d, to overcome the fluid resistance caused by the dispersion medium 310 and move to the common electrode 220 from the pixel electrode 190.

The seventh threshold driving voltage is a negative (-) voltage that allows the first to third electrophoretic particles 325a, 325b, and 325c to overcome the fluid resistance of the dispersion medium 310 and move to the common electrode 220 from the pixel electrode 190.

The eighth threshold driving voltage is a negative (-) voltage that allows all of the first to fourth electrophoretic particles 325a, 325b, 325c, and 325d to overcome the fluid resistance caused of the dispersion medium 310 and move to the common electrode 220 from the pixel electrode 190.

In some embodiments, the first to eighth threshold driving voltages are, respectively, +40V, +20V, +10V, +5V, -5V, -10V, -20V, and -40V.

First, the method for driving the electrophoretic display to provide the first color will be described. When the first threshold driving voltage (+40V) is applied, all of the first to fourth electrophoretic particles 325a, 325b, 325c, and 325d move to the pixel electrode 190. Accordingly, external light incident through the common electrode panel 200 from the outside is absorbed by the dispersion medium 310, so the pixel area is the first color, which is the darkest black.

Next, a method for driving the electrophoretic display to provide the second color will be described. When the fifth threshold driving voltage (-5V) is applied immediately after displaying the first color, only the first electrophoretic particles 325a, having the greatest charge, move to the common electrode 220 from the pixel electrode 190. Accordingly, part of the external light incident through the common electrode panel 200 from the outside is absorbed by the dispersion medium 310, and the remaining part of the external light is reflected outward by the first electrophoretic particles 325a located at the common electrode 220 to thus contribute to the displayed color. Accordingly, the resulting color of the pixel is the second color, which is brighter than the first, black, color.

Next, a method for driving the electrophoretic display to provide the fourth color will be described. When the sixth threshold driving voltage (-10V) is applied immediately after displaying the first color, only the first electrophoretic particles 325a, having the greatest charge, and the second electrophoretic particles 325b, having the next greatest charge, move to the common electrode 220 from the pixel electrode 190. Accordingly, part of the external light incident through the common electrode panel 200 from the outside is absorbed by the dispersion medium 310, and the remaining part of the external light is reflected outward by the first electrophoretic particles 325a and the second electrophoretic particles 325b located at the common electrode 220 to contribute to the displayed color. At this time, the electrophoretic particles reflecting the external light are the first electrophoretic particles 325a and the second electrophoretic particles 325b, Consequently, the pixel is the fourth color, which is brighter than the second color.

Next, a method for driving the electrophoretic display to provide the third color will be described. When the fourth threshold driving voltage (+5V) is applied immediately after displaying the fourth color, the first electrophoretic particles 325a, having the greatest charge, move back to the pixel electrode 190 from the common electrode 220. Accordingly, part of the external light incident through the common electrode panel 200 from the outside is absorbed by the dispersion medium 310, and the remaining part of the external light is reflected outward by the second electrophoretic particles 325b remaining at the common electrode 220 and thus contributing to the displayed color. At this time, the number of the second electrophoretic particles reflecting the external light and providing white is greater than that of the first electrophoretic particles 325a but less than the total number of the first electrophoretic particles 325a and the second electrophoretic particles 325b, Accordingly, the third color obtained at the pixel is brighter than the second color and darker than the fourth color.

Next, a method for driving the electrophoretic display to provide the eighth color will be described. When the seventh threshold driving voltage (-20V) is applied after displaying the first color, the first to third electrophoretic particles 325a, 325b, and 325c move to the common electrode 220 from the pixel electrode 190. Accordingly, part of the external light incident through the common electrode panel 200 from the outside is absorbed by the dispersion medium 310, and the remaining part of the external light is reflected outward by the first to third electrophoretic particles 325a, 325b, and 325c located at the common electrode 220 and thus contributing to the displayed color. At this time, the total number of the first to third electrophoretic particles 325a, 325b, and 325c reflecting the external light and providing white is greater than the total number of the first electrophoretic particles 325a and the second electrophoretic particles 325b, so the eighth color provided at the pixel is brighter than the fourth color.

Next, a method for driving the electrophoretic display to display the fifth color will be described. When the third threshold driving voltage (+10V) is applied immediately after displaying the eighth color, the first electrophoretic particles 325a, having the greatest charge, and the second electrophoretic particles 325b, having the next greatest charge, move to the pixel electrode 190 from the common electrode 220. Accordingly, part of the external light incident through the common electrode panel 200 from the outside is absorbed by the dispersion medium 310, and the remaining part of the external light is reflected outward by the third electrophoretic particles 325c remaining at the common electrode 220 to contribute to the displayed color. At this time, the number of the third electrophoretic particles 325c reflecting the external light is greater than the total number of the first electrophoretic particles 325a and the second electrophoretic particles 325b, so the fifth color provided at the pixel is brighter than the fourth color.

Next, a method for driving the electrophoretic display to provide the sixth color will be described. When the fifth threshold driving voltage (-5V) is applied immediately after displaying the fifth color, the first electrophoretic particles 325a, having the greatest charge, move back to the common electrode 220 from the pixel electrode 190. Accordingly, part of the external light incident through the common electrode panel 200 from the outside is absorbed by the dispersion medium 310, and the remaining part of the external light is reflected outward by the first electrophoretic particles 325a and the third electrophoretic particles 325c to contribute to the displayed color. At this time, the total number of the first electrophoretic particles 325a and the third electrophoretic particles 325c reflecting the external light is greater than the number of the third electrophoretic particles 325c, so the sixth color provided at the pixel is brighter than the fifth color.

Next, a method for driving the electrophoretic display to provide the seventh color will be described. When the fourth threshold driving voltage (+5V) is applied immediately after displaying the eighth color, the first electrophoretic particles 325a, having the greatest charge, move to the pixel electrode 190 from the common electrode 220. Accordingly, part of the external light incident through the common electrode panel 200 from the outside is absorbed by the dispersion medium 310, and the remaining part of the external light is reflected outward by the second electrophoretic particles 325b and the third electrophoretic particles 325c to contribute to the displayed color. At this time, the total number of the second electrophoretic particles 325b and third electrophoretic particles 325c reflecting the external light is greater than the total number of the first electrophoretic particles 325a and the third electrophoretic particles 325c but less than the total number of the first to third electrophoretic particles 325a, 325b, and 325c, so the seventh color provided at the pixel is brighter than either the sixth color or the eighth color.

Next, a method for driving the electrophoretic display to provide the sixteenth color will be described. When the eighth threshold driving voltage (-40V) is applied after displaying the first color, the first to fourth electrophoretic particles 325a, 325b, 325c, and 325d move to the common electrode 220 from the pixel electrode 190. Accordingly, most of the external light incident through the common electrode panel 200 from the outside is reflected outward by the first to fourth electrophoretic particles 325a, 325b, 325c, and 325d, to thus display the sixteenth color which is the brightest white color.

Next, a method for driving the electrophoretic display to provide the ninth color will be described. When the second threshold driving voltage (+20V) is applied after displaying the sixteenth color, the first electrophoretic particles 325a, second electrophoretic particles 325b, and third electrophoretic particles 325c move to the pixel electrode 190 from the common electrode 220. Accordingly, part of the external light incident through the common electrode panel 200 from the outside is absorbed by the dispersion medium 310, and the remaining part of the external light is reflected outward by the fourth electrophoretic particles 325d remaining at the common electrode 220 to contribute to the displayed color. At this time, the number of the fourth electrophoretic particles 325d reflecting the external light is greater than the total number of the first to third electrophoretic particles 325a, 325b, and 325c, so the ninth color provided at the pixel is brighter than the eighth color,

Next, a method for driving the electrophoretic display to provide the tenth color will be described, When the fifth threshold driving voltage (-5V) is applied after displaying the ninth color, the first electrophoretic particles 325a move to the common electrode 220 from the pixel electrode 190. Accordingly, part of the external light incident through the common electrode panel 200 from the outside is absorbed by the dispersion medium 310, and the remaining part of the external light is reflected outward by the first electrophoretic particles 325a and fourth electrophoretic particles 325d remaining at the common electrode 220 to contribute to the displayed color. At this time, the total number of the first and fourth electrophoretic particles 325a and 325d reflecting the external light is greater than the number of the fourth electrophoretic particles 325d, so the tenth color provided at the pixel is brighter than the ninth color.

Next, a method for driving the electrophoretic display to provide the twelfth color will be described. When the fifth threshold driving voltage (-10V) is applied after displaying the ninth color, the first electrophoretic particles 325a and the second electrophoretic particles 325b move to the common electrode 220 from the pixel electrode 190. Accordingly, part of the external light incident through the common electrode panel 200 from the outside is absorbed by the dispersion medium 310, and the remaining part of the external light is reflected outward by the first electrophoretic particles 325a, second electrophoretic particles 325b, and fourth electrophoretic particles 325d remaining at the common electrode 220 to contribute to the displayed color, At this time, the total number of the first electrophoretic particles 325a, second electrophoretic particles 325b, and fourth electrophoretic particles 325d reflecting the external light is greater than the total number of the first electrophoretic particles 325a and the fourth electrophoretic particles 325d, so the twelfth color provided at the pixel is brighter than the ninth color.

Next, a method for driving the electrophoretic display to provide the eleventh color will be described. When the fourth threshold driving voltage (+5V) is applied after displaying the twelfth color, the first electrophoretic particles 325a move to the pixel electrode 190 from the common electrode 220. Accordingly, part of the external light incident through the common electrode panel 200 from the outside is absorbed by the dispersion medium 310, and the remaining part of the external light is reflected outward by the second electrophoretic particles 325b and fourth electrophoretic particles 325d remaining at the common electrode 220 to contribute to the displayed color, At this time, the total number of the second electrophoretic particles 325b and fourth electrophoretic particles 325d reflecting the external light is greater than the total number of the first electrophoretic particles 325a and the fourth electrophoretic particles 325d but less than the total number of the first electrophoretic particles 325a, second electrophoretic particles 325d, and fourth electrophoretic particles 325d. Accordingly, the eleventh color provided at the pixel is brighter overall than the tenth color and darker than the twelfth color,

Next, a method for driving the electrophoretic display to provide the thirteenth color will be described. When the third threshold driving voltage (+10V) is applied after displaying the sixteenth color, the first electrophoretic particles 325a and the second electrophoretic particles 325b move to the pixel electrode 190 from the common electrode 220. Accordingly, part of the external light incident through the common electrode panel 200 from the outside is absorbed by the dispersion medium 310, and the remaining part of the external light is reflected outward by the third electrophoretic particles 325c and fourth electrophoretic particles 325d remaining at the common electrode 220 to contribute to the displayed color. At this time, the total number of the third electrophoretic particles 325c and fourth electrophoretic particles 325d reflecting the external light is greater than the total number of the first electrophoretic particles 325a, second electrophoretic particles 325b, and fourth electrophoretic particles 325d, so the thirteenth color provided at the pixel is brighter than the twelfth color.

Next, a method for driving the electrophoretic display to provide the fourteenth color will be described, When the fifth threshold driving voltage (-5V) is applied after displaying the thirteenth color, the first electrophoretic particles 325a move to the common electrode 220 from the pixel electrode 190. Accordingly, part of the external light incident through the common electrode panel 200 from the outside is absorbed by the dispersion medium 310, and the remaining part of the external light is reflected outward by the first electrophoretic particles 325a, third electrophoretic particles 325c, and fourth electrophoretic particles 325d remaining at the common electrode 220 to contribute to the displayed color, At this time, the total number of the first electrophoretic particles 325a, third electrophoretic particles 325c and fourth electrophoretic particles 325d reflecting the external light is greater than the total number of the third electrophoretic particles 325c and fourth electrophoretic particles 325d, so the fourteenth color provided at the pixel is brighter than the thirteenth color,

Next, a method for driving the electrophoretic display to provide the fifteenth color will be described. When the fourth threshold driving voltage (+5V) is applied after displaying the sixteenth color, only the first electrophoretic particles 325a move to the pixel electrode 190 from the common electrode 220. Accordingly, part of the external light incident through the common electrode panel 200 from the outside is absorbed by the dispersion medium 310, and the remaining part of the external light is reflected outward by the second electrophoretic particles 325b, third electrophoretic particles 325c, and fourth electrophoretic particles 325d remaining at the common electrode 220 to contribute to the displayed color. At this time, the total number of the second electrophoretic particles 325b, third electrophoretic particles 325c and fourth electrophoretic particles 325d reflecting the external light is greater than the total number of the first electrophoretic particles 325a, third electrophoretic particles 325c, and fourth electrophoretic particles 325d but less than the total number of the first to fourth electrophoretic particles 325a, 325b, 325c, and 325d. Accordingly, the fifteenth color provided at the pixel is brighter than the fourteenth color and darker than the sixteenth color.

As seen from the above, each pixel can provide eight different levels of black-and-white brightness, starting from the first, darkest color and up to the sixteenth, brightest color, when at least one of the first to eighth threshold driving voltages is applied. Thus, the present exemplary embodiment of the present invention advantageously provides a large number of brightness levels from black to white.

Further, in some embodiments, the electrophoretic particles 323 additionally include fifth electrophoretic particles (not shown) colored white. The charge of each fifth electrophoretic particle is about one sixteenth of the charge of one first electrophoretic particle 325a. The number of the fifth electrophoretic particles may be about 16 times larger than the number of the first electrophoretic particles 325a, or the size of each fifth electrophoretic particle may be about 16 times larger than the size of one first electrophoretic particle 325a. Using this technique, 32 different levels of black and white brightness, starting from the first color, which is black, and ending with the thirty-second color, which is white, can be obtained by applying 10 different threshold driving voltages to the electrophoretic display.

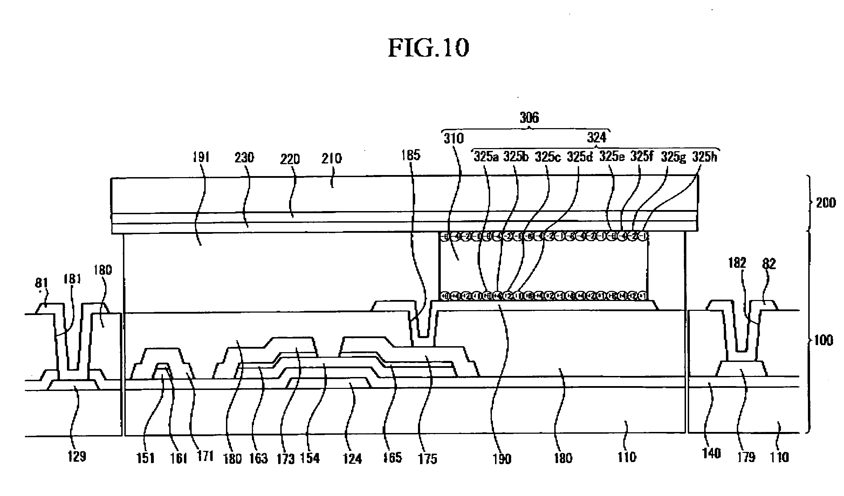

Now an electrophoretic display according to another exemplary embodiment of the present invention will be described with reference to FIG. 10. FIG. 10 is a cross-sectional view of the electrophoretic display according to that embodiment. The electrophoretic display of FIG. 10 is identical to the electrophoretic display of FIG. 9, except that electrophoretic particles 324 of electrophoretic member 306 of FIG. 10 include additional, black, negatively charged electrophoretic particles. More particularly, in addition to the first electrophoretic particles 325a, second electrophoretic particles 325b, third electrophoretic particles 325c, and fourth electrophoretic particles 325d, the electrophoretic particles 324 include black, negatively charged fifth electrophoretic particles 325e, sixth electrophoretic particles 325f, seventh electrophoretic particles 325g, and eighth electrophoretic particles 325h.

In other embodiments, the first to fourth electrophoretic particles 325a, 325b, 325c, and 325d all have negative charges, and the fifth to eighth electrophoretic particles 325e, 325f, 325g, and 325h all have positive charges.

The charge of each sixth electrophoretic particle 325f, the charge of each seventh electrophoretic particle 325g, and the charge of each eighth electrophoretic particle 325h are respectively about one-half, one quarter, and one eighth of the charge of each fifth electrophoretic particles 325e. The charge of each first electrophoretic particle 325a and the charge of each fifth electrophoretic particle 325e are substantially identical. In FIG. 10, the charges of the fifth to eighth electrophoretic particles 325e, 325f, 325g, and 325h are shown as -8, -4, and -2, respectively, for the convenience of understanding, However, the charges of the fifth to eighth electrophoretic particles 325e, 325f, 325g, and 325h may be set to other ratios.

Although FIG. 10 shows equal numbers of the fifth to eighth electrophoretic particles 325e, 325f, 325g, and 325h, in some embodiments the sixth electrophoretic particles 325f, seventh electrophoretic particles 325g, and eighth electrophoretic particles 325h are respectively twice, four times, and eight times as many as the fifth electrophoretic particles 325e. This is done to make the numbers of the fifth, sixth, seventh, and eighth electrophoretic particles consistent with the numbers of the first to fourth electrophoretic particles 325a, 325b, 325c, and 325d. In other embodiments, the number of the sixth electrophoretic particles 325g, the number of the seventh electrophoretic particles 325g, and the number the eighth electrophoretic particles 325g may each be substantially the same as the number of the fifth electrophoretic particles 325e, and the size of each sixth electrophoretic particle 325f, the size of each seventh electrophoretic particle 325g, and the size of each eighth electrophoretic particle 325h may respectively be about twice, four times, and eight times larger than the size of each fifth electrophoretic particle 325e. Other ratios for the numbers and sizes of the fifth to eighth electrophoretic particles 325e, 325f, 325g, and 325h are also possible.

The electrophoretic display of FIG. 10 can be operated using the same method as the electrophoretic display of FIG. 9, except that the electrophoretic member 306 of FIG.10 provides sixteen levels of black and white brightness, beginning with the first, black color and ending with the sixteenth, white color, and the fifth to eighth electrophoretic particles 325e, 325f, 325g, and 325h move in the opposite direction relative to the first to fourth electrophoretic particles 325a, 325b, 325c, and 325d with respect to each threshold driving voltage applied to the electrophoretic member 306. Thus, a detailed description of the operation of the electrophoretic display of FIG. 10 will be omitted.

In some embodiments, the electrophoretic particles 324 are placed into additional dispersion medium 330 (not shown in FIG.10) located in capsules 340, as in FIG. 4.

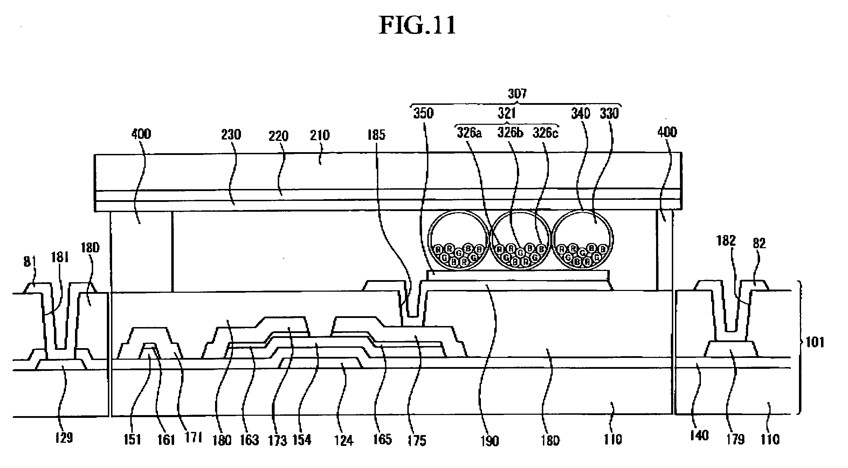

Now an electrophoretic display according to another exemplary embodiment of the present invention will be described with reference to FIG. 11, FIG. 11 is a cross-sectional view of the electrophoretic display according to that embodiment. The electrophoretic display of FIG. 11 is identical to the electrophoretic display of FIG. 7, except that the capsules 340 of electrophoretic member 307 of FIG. 11 are not kept in place by dispersion medium 310 contained within partitioning walls 191, but rather are affixed to the pixel electrodes 190 by a binder 350. Further, the electrophoretic display of FIG. 11 has a sealant 400 formed along the periphery of thin film transistor array panel 101 and common electrode panel 200 in order to fix together the thin film transistor array panel 101 and the common electrode panel 200 and to keep moisture and impurities out of the electrophoretic display.

The electrophoretic display of FIG.11, and its operation, can be as in FIGs. 1, 2, and 3A to 3G, to provide the same kind of display.

Some embodiments of the present invention thus include electrophoretic displays and methods of operation of the electrophoretic displays. Some embodiments provide different brightness levels and colors. While this invention has been described in connection with what is presently considered to be practical exemplary embodiments, it is to be understood that the invention is not limited to the disclosed embodiments, but, on the contrary, is intended to cover various modifications and equivalent arrangements as defined by the appended claims.

## Claims

1. An electrophoretic display comprising:
(a) a first electrode;
(b) a second electrode;
(c) an electrophoretic member between the first and second electrodes, the electrophoretic member comprising:
a first electrophoretic particle, a second electrophoretic particle and a third electrophoretic particle respectively have different threshold driving voltage and
a dispersion medium for distributing the first, second and third particles;
(d) circuitry which appl ies the threshold driving voltages between the first and second electrodes to move the first, second and third particles selectively to display different colors.

2. The electrophoretic display of claim 1, wherein the first particles each of which carries a first charge, second particles each of which carries a second charge, and third particles each of which carries a third charge, the first, second and third charges being different from each other;

3. The electrophoretic display of claim 2, wherein the first, second and third charges are all positive or all negative.

4. The electrophoretic display of claim 3, wherein the first, second and third particles are white.

5. The electrophoretic display of claim 4, wherein the second charge is about half of the first charge, and the third charge is about one quarter of the first charge.

6. The electrophoretic display of claim 3, wherein the number of the first particles, the number of second particles and the number of third particles are different from each other.

7. The electrophoretic display of claim 6, wherein the number of the second particles is about twice the number of the first particles, and the number of the third particles is about four times the number of the first particles.

8. The electrophoretic display of claim 3, wherein each second particle is about twice larger than each first particle, and
each third particle is about four times larger than each first particle.

9. The electrophoretic display of claim 5, wherein the electrophoretic member further comprises fourth particles that are white, and
a charge of each fourth particle is about one eighth of the first charge.

10. The electrophoretic display of claim 9, wherein the number of the fourth particles is about eight times the number of the first particles.

11. The electrophoretic display of claim 9, wherein each fourth particle is about eight times larger than each first particle.

12. The electrophoretic display of claim 5, wherein the electrophoretic member further comprises fifth particles, sixth particles, and seventh particles, the fifth, sixth and seventh particles being black, each fifth particle carrying a fifth charge, each sixth particle carrying a sixth charge, each seventh particle carrying a seventh charge, wherein the fifth, sixth and seventh charges are respectively equal in magnitude but opposite in polarity to the first, second, and third charges.

13. The electrophoretic display of claim 12, wherein the sixth charge is about one half of the fifth charge, and
the seventh charge is about one quarter of the fifth charge.

14. The electrophoretic display of claim 12, wherein the number of the sixth particles is about twice the number of the fifth particles, and
the number of the seventh particles is about four times the number of the fifth particles.

15. The electrophoretic display of claim 12, wherein each sixth particle is about twice larger than each fifth particle, and
each seventh particle is about four times larger than each fifth particle.

16. The electrophoretic display of claim 13, wherein the electrophoretic member further comprises eighth particles that are black, and
a charge of each eighth particle is about one eighth of the fifth charge.

17. The electrophoretic display of claim 16, wherein the number of the eighth particle is eight times the number of the fifth particles.

18. The electrophoretic display of claim 16, wherein each eighth particle is eight times larger than each fifth particle.

19. The electrophoretic display of claim 3, wherein the first, second and third particles are respectively red, green, and blue.

20. The electrophoretic display of claim 19, wherein the second charge is about one-half of the first charge, and
the third charge is about one quarter of the first charge.

21. The electrophoretic display of claim 20, wherein the electrophoretic member further comprises fifth particles, sixth particles, and seventh particles, the fifth, sixth and seventh particles being black, each fifth particle carrying a fifth charge, each sixth particle carrying a sixth charge, each seventh particle carrying a seventh charge, wherein the fifth, sixth and seventh charges are respectively equal in magnitude but opposite in polarity to the first, second, and third charges,
wherein the sixth charge is about one half of the fifth charge, and
the seventh charge is about one quarter of the fifth charge.

22. The electrophoretic display of claim 1, wherein the electrophoretic member further comprises a capsule confining at least some of the particles and at least some of the dispersion medium.

23. The electrophoretic display of claim 1, further comprising a thin film transistor connected to the first electrode.

24. A method for driving an electrophoretic display, the electrophoretic display comprising a first electrode, a second electrode, first to third particles between the first and second electrodes, each first particle carrying a first charge, each second particle carrying a second charge, each third particle carrying a third charge, the first, second and third charges being different from each other, the electrophoretic display comprising a dispersion medium for dispersing the first to third particles, the electrophoretic display operable to display at least eight different colors in response to six different threshold driving voltages,
the method comprising applying at least one of the six threshold driving voltages to position the particles to display one of the eight colors.

25. The method of claim 24, wherein the eight colors are first to eighth colors, the six threshold driving voltages are first to sixth threshold driving voltages, and wherein the method comprises:
applying the first threshold driving voltage to move the first, second and third particles to the first electrode to display the first color;
applying the fourth threshold driving voltage to move the first particles to the second electrode to display the second color;
applying the fifth threshold driving voltage to move the first and second particles to the second electrode to display the fourth color;
applying the sixth threshold driving voltage to move the first to third particles to the second electrode to display the eighth color;
applying the third threshold driving voltage after displaying the fourth color to move the first particles to the first electrode to display the third color;
applying the second threshold driving voltage after displaying the eighth color to move the first and second particles to the first electrode to display the fifth color;
applying the fourth threshold driving voltage after displaying the fifth color to move the first particles to the second electrode to display the sixth color; and
applying the third threshold driving voltage after displaying the eighth color to move the first particles to the first electrode to display the seventh color,

26. The method of claim 25, wherein displaying the second color, the fourth color, and the eighth color are performed after displaying the first color.

27. The method of claim 25, wherein the first threshold driving voltage, the second threshold driving voltage, and the third threshold driving voltage are respectively equal in magnitude but opposite in polarity to the sixth threshold driving voltage, the fifth threshold driving voltage, and the fourth voltage.

28. The method of claim 25, wherein the first to third particles are white, and
the brightness increases from the first color to the eighth color.

29. The method of claim 28, wherein the electrophoretic display further comprises fourth to sixth particles which are black, each fourth particle carrying an electric charge having the same magnitude but the opposite polarity to the first charge, each fifth particle carrying a charge having the same magnitude but the opposite polarity to the second charge, each sixth particle carrying a charge having the same magnitude but the opposite polarity to the third charge,
wherein in the displaying of the first to eighth colors, the fourth to sixth particles move in an opposite direction relative to the first to third particles.

30. The method of claim 25, wherein the first to third particles are respectively red, green, and blue, and
the first color is black, the second color is red, the third color is green, the fourth color is yellow, the fifth color is blue, the sixth color is magenta, the seventh color is cyan, and the eighth color is white.

31. The method of claim 25, wherein the electrophoretic display further comprises fourth to sixth particles, each fourth particle carrying a charge having the same magnitude but the opposite polarity to the first charge, each fifth particle carrying a charge having the same magnitude but the opposite polarity to the second charge, each sixth particle carrying a charge having the same magnitude but the opposite polarity to the third charge,
wherein in the displaying of the first to eighth colors, the fourth to sixth particles move in an opposite direction relative to the first to third particles.

32. A method for driving an electrophoretic display, the electrophoretic display comprising a first electrode, a second electrode, first to fourth particles between the first and second electrodes, each first particle carrying a first charge, each second particle carrying a second charge, each third particle carrying a third charge, each fourth particle carrying a fourth charge, the first, second, third and fourth charges being different from each other, the electrophoretic display comprising a dispersion medium for dispersing the first to fourth particles, the electrophoretic display operable to display at least sixteen different colors in response to eight different threshold driving voltages,
the method comprising applying at least one of the eight threshold driving voltages to position the first to fourth particles to display one of the sixteen colors.

33. The method of claim 32, wherein the sixteen colors are first to sixteenth colors, the eight threshold driving voltages are first to eighth threshold driving voltages, and wherein the method comprises:
applying the first threshold drivingvoltage to move all of the first to fourth particles to the first electrode to display the first color;
applying the fifth threshold drivingvoltage to move the first particles to the second electrode to display the second color;
applying the sixth threshold driving voltage to move the first and second particles to the second electrode to display the fourth color;
applying the seventh threshold driving voltage to move the first to third particles to the second electrode to display the eighth color;
applying the eighth th reshold driving voltage to move the first to fourth particles to the second electrode to display the sixteenth color;
applying the fourth threshold driving voltage after displaying the fourth color to move the first particles to the first electrode to display the third color;
applying the third threshold driving voltage after displaying the eighth color to move the first and second particles to the first electrode to display the fifth color;
applying the fifth threshold driving voltage after displaying the fifth color to move the first particles to the second electrode to display the sixth color;
applying the fourth threshold driving voltage after displaying the eighth color to move the first particles to the first electrode to display the seventh color;
applying the second threshold driving voltage after displaying the sixteenth color to move the first to third particles back to the first electrode to display the ninth color;
applying the fifth threshold driving voltage after displaying the ninth color to move the first particles to the second electrode to display the tenth color;
applying the sixth threshold driving voltage after displaying the ninth color to move the first and second particles to the second electrode to display the twelfth color;
applying the fourth threshold driving voltage after displaying the twelfth color to move the first particles back to the first electrode to display the eleventh color;
applying the third threshold driving voltage after displaying the sixteenth color to move the first and second particles to the first electrode to display the thirteenth color;
applying the fifth threshold driving voltage after displaying the thirteenth color to move the first particles to the second electrode to display the fourteenth color; and
applying the fourth threshold driving voltage after displaying the sixteenth color to move the first particles to the first electrode to display the fifteenth color.

34. The method of claim 33, wherein displaying of the second color, the fourth color, the eighth color, and the sixteenth color are performed after displaying the first color.

35. The method of claim 33, wherein the eighth threshold driving voltage, the seventh threshold driving voltage, the sixth threshold driving voltage, and the fifth threshold driving voltage have respectively the same magnitudes but the opposite polarities to the first threshold driving voltage, the second threshold driving voltage, the third threshold driving voltage, and the fourth threshold driving voltage.

36. The method of claim 33, wherein the first to fourth particles are white, and
the brightness increases from the first color to the sixteenth color.

37. The method of claim 36, wherein the electrophoretic display further comprises fifth to eighth particles which are black, each fifth particle carrying a charge having the same magnitude but the opposite polarity to the first charge, each sixth particle carrying a charge having the same magnitude but the opposite polarity to the second charge, each seventh particle carrying a charge having the same magnitude but the opposite polarity to third charge, each eighth particle carrying a charge having the same magnitude but the opposite polarity to fourth charge,
wherein in displaying the first to sixteenth colors, the fifth to eighth particles move in an opposite direction relative to the first to fourth particles.
